# EUROPEAN PATENT SPECIFICATION

(11) **EP 4 640 413 B1**
(45) Date of publication and mention of the grant of the patent: **19.08.2026**
(21) Application number: 25171479.6
(22) Date of filing: 18.04.2025
(51) Int. Cl.: B29C 70/52, B29B 17/00, B29B 17/04, B29K 105/12, B29K 101/12

(54) **PULTRUSION PROCESS FOR PRODUCING AN ELONGATED BODY OF REINFORCED POLYMERIZABLE RESIN AND PROFILE OBTAINED BY SAID PROCESS**
PULTRUSIONSVERFAHREN ZUR HERSTELLUNG EINES LÄNGLICHEN KÖRPERS AUS VERSTÄRKTEM POLYMERISIERBAREM HARZ UND DURCH DIESES VERFAHREN ERHALTENES PROFIL
PROCÉDÉ DE PULTRUSION POUR LA FABRICATION D'UN CORPS ALLONGÉ EN RÉSINE POLYMÉRISABLE RENFORCÉE ET PROFILÉ OBTENU PAR CE PROCÉDÉ

(30) Priority: 23.04.2024 IT 202400009226
(43) Date of publication of application: 29.10.2025
(73) Proprietor: Top Glass Industries S.p.A., 25128 Brescia BS (IT)
(72) Inventor: BRANCA, Alfonso, 20145 MILANO (IT)
(74) Representative: PGA S.p.A.

(56) References cited:
- EP-B1- 0 814 950
- DE-A1- 102013 219 960

## Description

### FIELD OF THE INVENTION

The present invention relates to a pultrusion process for producing an elongated body, such as a profile, from composite material wherein recycled composite material is also used. The invention also relates to a profile made of composite material, wherein the composite material used also includes recycled composite material.

### STATE OF THE ART

As is well known, there is an increasing need for the reduction of environmental impact and the convenient reuse of materials from discarded object recovery operations.

In particular, plastics and composite materials using such plastics, given their composition and market reach, have a not insignificant environmental impact.

In fact, products made of composite materials have a polymer matrix (resulting from the solidification of thermoplastic or heat-curing resins) wherein a mechanically resistant structure is embedded, consisting of fibers of material with good mechanical properties.

When recycling manufactured products made of composite materials, thermoplastic-based binder materials present fewer recovery problems than thermoset-based materials; in contrast, for composite materials with thermoset resins, it is not possible to easily recover the resin.

To overcome these drawbacks, the recycling of thermoset-based composite products is, for example, typically made possible by prior destruction or mechanical crushing of the product itself, so as to obtain heterogeneous material consisting of broken fibers, portions of fibers nested in polymer matrix granules, and polymer matrix granules. To recycle the resulting material, the latter can be used as a filler in applications where no special mechanical properties are required. EP0814950B1 relates to the manufacture of fiber reinforced structures and more specifically to an pultrusion apparatus and process for making resin impregnated fibers in the form of rods, bars, tubes, pipes, and other structural shapes.

In this situation, the technical task posed behind the present invention is to devise a pultrusion process for specifically producing elongated bodies, such as profiles, using recycled composite material so that the resulting product is not adversely affected by the presence of the recycled material.

An additional purpose is to provide a process that can ensure effective stability of the coupling between the binding resin, the new fibers used, and the recycled material.

An additional important purpose of the present invention is to find a pultrusion process for the production of elongated bodies such as profiles that ensures optimal recycled material utilization.

Furthermore, another purpose of the process according to the present invention is to devise a methodology that ensures the use of the recycled material in such a way that the presence of the recycled material can be exploited advantageously for the mechanical behavior of the elongated body or profile thus obtained.

In addition, an aim of the present invention is to devise a production process that allows the extensive use of material from recycling operations, with consequent benefits on reducing environmental impact and with convenient reuse of poorly biodegradable material.

Another important purpose of the invention is to devise a process and related product (such as a profile) that does not increase production costs or manufacturing complexity compared to state-of-the-art pultrusion processes.

### SUMMARY

The technical task specified, and the purposes listed above, are substantially achieved by a pultrusion process and by a pultruded profile according to one or more of the appended claims. The invention is defined by the process of claim 1 and the product of claim 11.

Aspects of the invention are described below.

A 1st aspect concerns a pultrusion process for producing an elongated body, optionally a profile, from composite material, said process comprising the following steps:
- supplying new reinforcement fibers to an impregnation station;
- impregnating with liquid-curable resin the new reinforcement fibers at the impregnation station forming new impregnated reinforcement fibers;
- moving a laminar body made of at least partially recycled material to a pultrusion die,
- moving said new impregnated reinforcing fibers toward the pultrusion die so that within the pultrusion die the new impregnated fibers sit adjacent to the laminar body;
- solidifying at least partially said liquid-curable resin, forming an elongated body in the solid state at the exit of the pultrusion die.

In a 2nd aspect according to the preceding aspect, the elongated body formed at the exit of the pultrusion die is a profile.

In a 3rd aspect according to any one of the preceding aspects said laminar body includes:
- a containment layer, and
- recycled material obtained by crushing composite material, such recycled material including recycled fibers and recycled polymer particles, said recycled material being arranged on one side of the containment layer.

In a 4th aspect according to any one of the preceding aspects the pultrusion die internally includes a forming cavity configured to shape the elongated body during the pultrusion process.

In a 5th aspect according to any one of the above aspects, the steps of moving the impregnated new reinforcement fibers and the laminar body to the pultrusion die are configured to arrange, internally to the molding cavity, the impregnated new reinforcement fibers perimetrally to the laminar body.

In a 6th aspect according to the preceding aspect, the newly impregnated reinforcement fibers are arranged, inside the pultrusion die, so as to completely envelop the laminar body.

In a 7th aspect according to any one of the above aspects, the process involves moving two or more laminar bodies of at least partially recycled material to the pultrusion die and wherein the newly impregnated reinforcing fibers are arranged, within the pultrusion die, so as to completely envelop each laminar body.

In an 8th aspect according to any one of the above aspects, the elongated body, exiting the pultrusion die, has a cross section wherein the laminar body is completely encapsulated by a reinforced polymer matrix formed by said newly impregnated reinforcing fibers.

In a 9th aspect according to any one of the preceding aspects, the process involves moving two or more laminar bodies of at least partially recycled material to the pultrusion die.

In a 10th aspect according to the preceding aspect, the elongated body exiting the pultrusion die has cross section wherein each laminar body is completely encapsulated by a reinforced polymer matrix formed by said new impregnated reinforcing fibers.

In an 11th aspect according to any one of the preceding aspects, the process involves a step of wetting the (or each) laminar body(s) with liquid-curable resin.

In a 12th aspect according to the preceding aspect, the wetting step includes impregnating the (or each) laminar body with liquid-curable resin at the impregnation station.

In a 13th aspect according to any one of the above two aspects, the liquid resin used in said wetting step is the same as (in the sense that it has the same composition as) the liquid curable resin used for impregnating the new reinforcement fibers.

In a 14th aspect according to any one of the preceding aspects, in combination with the 4th aspect, said forming cavity has a symmetrical profile in cross section.

In a 15th aspect according to the preceding aspect, the (or each) laminar body crosses the forming cavity by arranging itself symmetrically with respect to said profile of the forming cavity itself.

In a 16th aspect according to any one of the preceding aspects, in combination with the 4th aspect, the (each) laminar body(s) crosses the forming cavity by arranging itself centrally with respect to the cavity profile In a 17th aspect according to any one of the preceding aspects, the process includes introducing into said pultrusion die additional amount of liquid polymerizable resin.

In an 18th aspect according to any one of the preceding aspects, the elongated body extracted from the pultrusion die presents profile conformation with uniform cross section, said cross section having:
- a first zone, in which new reinforcing fibers embedded in polymer matrix formed by said polymerizable resin are arranged,
- a second zone completely surrounded, seamlessly, by the first zone, the second zone comprising the laminar body in which a polymeric matrix formed by said polymerizable resin is present.

In a 19th aspect according to the preceding aspect, the process provides that, following said solidification step of the liquid polymerizable resin, the polymeric matrix of the second zone present inside the laminar body is interconnected with the polymeric matrix of the first zone.

In a 20th aspect according to any one of the preceding two aspects, the first zone has an area between 20 and 70 percent compared to the total cross-sectional area of the elongated body.

In a 21st aspect according to any one of the preceding three aspects, the second zone, particularly without new reinforcement fibers, has an area measuring between 30 and 80 percent of the total cross-sectional area of the elongated body.

In a 22nd aspect according to any one of the preceding four aspects the first zone is a perimeter zone that has a closed annular shape extending around the second zone that is a central zone of the elongated body in formation where the laminar body is positioned.

In a 23rd aspect according to any one of the preceding five aspects the first zone has a cross-sectional area which is less than that of the second zone.

In a 24th aspect according to any one of the preceding aspects, the process involves new reinforcement fibers being continuously fed to the pultrusion die so that they extend, optionally parallel to each other, along the entire elongated body extracted from the pultrusion die.

In a 25th aspect according to any one of the preceding aspects, the process provides that the new reinforcement fibers be continuously fed to the pultrusion die, and that these new reinforcement fibers include fibers parallel to each other extending along the entire elongated body (or entire profile) being formed.

In a 26th aspect according to any one of the preceding aspects the new reinforcement fibers are in the form of one among:
- unidirectional bundles of fibers,
- fibers mats,
- fabrics-nonwovens, or
- fibers fabrics.

In a 27th aspect according to any one of the above aspects, new reinforcement fibers are glass fibers, carbon fibers, boron fibers, basalt fibers, aramid fibers, natural fibers, or combinations thereof.

In a 28th aspect according to any one of the above aspects, the process involves continuous feeding of the (or each) laminar body(s) to the pultrusion die at the same time as the new reinforcement fibers.

In a 29th aspect according to any one of the above aspects, the process involves the laminar body extending longitudinally along the entire elongated body exiting the pultrusion die.

In a 30th aspect according to any one of the above aspects, the process involves setting up the (or each) laminar body continuously during the pultrusion process.

In a 31st aspect according to the preceding aspect arrange the (or each) laminar body includes crushing, optionally by mechanical grinding, one or more composite material waste products to obtain said recycled material comprising recycled fibers and recycled polymer particles (powder).

In a 32nd aspect according to any one of the preceding two aspects prepare the (or each) laminar body includes depositing the recycled material on said side of the containment layer.

In a 33rd aspect according to the preceding aspect arrange the (or each) laminar body includes binding the recycled material to said side of the containment layer by one or more of:
- application of glue to the recycled material,
- application of glue to the containment layer,
- melting of at least part of the recycled material,
- melting of at least part of the containment layer.

In a 34th aspect according to any one of the preceding four aspects prepare the (or each) laminar body includes associating the containment layer with an auxiliary containment layer so that recycled material is interposed between the containment layer and the auxiliary containment layer.

In a 35th aspect according to the preceding aspect associating the containment layer with the auxiliary containment layer involves:
- arrange the containment layer and the auxiliary containment layer in a mutually overlapping relationship, and
- couple the containment layer and auxiliary containment layer together.

In a 36th aspect according to any one of the preceding two aspects during said step of associating the containment layer with the auxiliary containment layer the process includes the following steps:
- (a) moving the containment layer;
- (b) depositing the recycled material on said side of the containment layer while moving the latter;
- (c) moving the auxiliary containment layer above the containment layer and the recycled material deposited on the containment layer itself.

In a 37th aspect according to the preceding aspect:
- step (a) of moving the containment layer involves unrolling the containment layer from a respective feed roller, arranging an unrolled section of the containment layer along a feed plane,
- step (b) of depositing the recycled material involves distributing the recycled material over said unrolled section of the containment layer,
- step (c) of moving the auxiliary containment layer involves unrolling the auxiliary containment layer from a respective feed roller by arranging an unrolled section of the auxiliary containment layer above the recycled material distributed on the unrolled section of the containment layer.

In a 38th aspect according to the preceding aspect couple together the containment layer and the auxiliary containment layer includes:
- (d) binding the unrolled section of the auxiliary containment layer with the unrolled section of the containment layer along one or more connecting lines, optionally obtained by glueing lines, heat-sealing lines, or seam lines, arranged at least longitudinally along the containment layer and the auxiliary containment layer.

In a 39th aspect according to the preceding aspect, steps (b) and (d) occur during said steps (a) and (c) to gradually form the (or each) laminar body(s) that is then sent to the pultrusion die.

In a 40th aspect according to any one of the three preceding aspects, the step (b) of depositing also includes a step of adjusting a deposition height of the recycled material by control of one or more of:
- a forward speed of said unrolled section of the containment layer,
- a deposition rate of the recycled material on the containment layer,
- a position of an operationally active recycled material thickness controller on the recycled material deposited on the containment layer to determine a maximum thickness.

In a 41st aspect according to any one of the preceding claims, the containment layer is configured to allow the liquid resin to pass through while preventing the recycled material from passing through.

In a 42nd aspect according to the preceding aspect, the containment layer is a porous material or provided with through openings.

In a 43rd aspect according to one of the preceding two aspects, the containment layer is a fabric, a nonwoven fabric, a plastic grid film, a metal grid film, a metal mesh, or a plastic mesh.

In a 44th aspect according to any one of the preceding claims the auxiliary containment layer, if present, is configured to allow the liquid resin to pass through while preventing the recycled material from passing through.

In a 45th aspect according to the preceding aspect, the auxiliary containment layer is a porous material or provided with through openings.

In a 46th aspect according to either of the preceding two aspects, the auxiliary containment layer is a fabric, nonwoven fabric, a plastic grid film, a metal grid film, a metal mesh, or a plastic mesh.

A 47th aspect concerns a pultruded profile made of composite material, comprising an elongated body with a cross section having:
- a first zone, in which new reinforcement fibers embedded in new polymer matrix are arranged, and
- a second zone comprising a laminar body;
wherein the laminar body includes at least partially recycled material and wherein the laminar body also incorporates new polymer matrix.

In a 48th aspect according to the preceding aspect said laminar body includes:
- a containment layer and
- recycled material arranged on one side of the containment layer, such recycled material being obtained by crushing composite material and including recycled fibers and recycled polymer particles.

In a 49th aspect according to any one of the preceding two aspects, the new polymer matrix of the second zone, present internally in the laminar body, is connected with the new polymer matrix of the first zone.

In a 50th aspect according to any one of the three aspects above, the first zone is adjacent to and in contact with the second zone.

In a 51st aspect according to any one of the preceding four aspects, the second zone hosting the laminar body is completely encapsulated by the newly reinforced polymer matrix of the first zone.

In a 52nd aspect according to any one of the preceding five aspects, the first zone is or includes a perimeter zone of the profile cross-section.

In a 53rd aspect according to any one of the preceding six aspects, the second zone is an internal, optionally central zone, of the profile cross-section and is completely surrounded, seamlessly, by the first zone.

In a 54th aspect according to any one of the preceding seven aspects said second zone comprises the laminar body in which new polymerizable resin matrix, formed by the same polymerizable resin forming the matrix of the first zone, is present.

In a 55th aspect according to any one of the preceding eight aspects, the new reinforcement fibers extend along the entire elongated body.

In a 56th aspect according to any one of the preceding nine aspects, the new reinforcement fibers are in the form of one among:
- unidirectional bundles of fibers oriented along a longitudinal axis of predominant development of the pultruded profile,
- mats of fibers wherein part of the fibers are oriented along the longitudinal axis of development prevailing pultruded profile and part of the fibers are oriented transverse to said longitudinal axis prevailing pultruded profile, or
- woven fabrics of fibers or nonwoven fabrics of fibers wherein part of the fibers are oriented along the prevailing longitudinal axis of development of the pultruded profile and part of the fibers are oriented transverse to said prevailing longitudinal axis of the pultruded profile.

In a 57th aspect according to any one of the preceding ten aspects, the new reinforcement fibers are glass fibers, carbon fibers, boron fibers, basalt fibers, aramid fibers, natural fibers, or combinations thereof.

In a 58th aspect according to any one of the preceding eleven aspects the laminar body recycled material is bound to the containment layer by one or more of:
- bonding zones between the recycled material and the containment layer,
- welding zones between the recycled material and the containment layer.

In a 59th aspect according to any one of the preceding twelve aspects, the laminar body includes an auxiliary containment layer coupled to the containment layer so that recycled material is interposed between the containment layer and the auxiliary containment layer.

In a 60th aspect according to any one of the preceding thirteen aspects, the laminar body includes one or more connecting lines between the containment layer and the auxiliary containment layer arranged at least longitudinally along the containment layer and the auxiliary containment layer.

In a 61st aspect according to any one of the preceding fourteen aspects, the laminar body includes one or more connecting lines between the containment layer and the auxiliary containment layer, obtained by glueing lines, heat-sealing lines, or seam lines, arranged at least longitudinally along the containment layer and the auxiliary containment layer.

In a 62nd aspect according to any one of the preceding fifteen aspects, the recycled material has constant thickness and is evenly distributed on the containment layer.

In a 63rd aspect according to any one of the preceding sixteen aspects, the new polymer matrix present in the first zone and second zone is derived from solidification of the same polymerizable resin.

In a 64th aspect according to any one of the preceding seventeen aspects, the new polymer matrix present in the laminar body occupies interstices present in the recycled material, and fits into the porosity or openings of the containment layer, creating a compact laminar body.

In a 65th aspect according to any one of the preceding eighteen aspects, the new polymer matrix present in the laminar body occupies interstices present in the recycled material, and fits into the porosity or openings of the containment layer and the porosity or openings of the auxiliary containment layer, creating a compact laminar body.

In a 66th aspect according to any one of the nineteen aspects above, the containment layer is configured to allow the polymerizable resin liquid intended to form the new polymer matrix present in the laminar body to pass through, while preventing the recycled material from passing through.

In a 67th aspect according to any one of the preceding twenty aspects the containment layer is made of a porous material or provided with through openings such as optionally a fabric, non-woven fabric, plastic grid film, metal grid film, wire mesh, plastic mesh.

In a 68th aspect according to any one of the preceding twenty-one aspects, the auxiliary containment layer is configured to allow the liquid polymerizable resin intended to form the new polymer matrix present in the laminar body to pass through, while preventing the recycled material from passing through.

In a 69th aspect according to any one of the preceding twenty-two aspects, the auxiliary containment layer is made of a porous material or provided with through-openings such as optionally a fabric, non-woven fabric, plastic grid film, metal grid film, wire mesh, plastic mesh.

In a 70th aspect according to any one of the preceding twenty-three aspects the first zone has a cross-sectional area which measures less than that of the second zone.

In a 71st aspect according to any one of the preceding twenty-four aspects, the first zone has a cross-sectional area measuring between 30 and 70 percent of the total cross-sectional area of the elongated body.

In a 72nd aspect according to any one of the preceding twenty-five aspects the second zone has a cross-sectional area measuring between 20 and 80 percent of the total cross-sectional area of the elongated body.

In a 73rd aspect according to any one of the preceding twenty-six aspects the cross section of the elongated body comprises two or more of said first zones and two or more of said second zones, each of the second zones being surrounded by a respective first zone.

In a 74th aspect according to the preceding aspect, the sum of the area of all first zones is less than the sum of the areas of all second zones.

In a 75th aspect according to the 73rd or 74th aspect, the first zones have a total cross-sectional area of between 30 and 70 percent compared with the total cross-sectional area of the elongated body.

In a 76th aspect according to the 73rd or 74th or 75th aspect, the second zones have a total cross-sectional area of 20 to 80 percent compared with the total cross-sectional area of the elongated body.

In a 77th aspect the pultruded profile is obtained by using the process according to any one of the aspects from the 1st to the 46th or 78th or 79th.

In a 78th aspect, the liquid polymerizable resin used in the process according to any one of aspects from the 1st to the 46th is a thermoset resin.

In a 79th aspect, the laminar body used in the process according to any one of aspects 1 to 46 includes recycled material obtained by crushing composite material having a thermosetting polymer resin matrix.

### DRAWINGS

A description of a non-limiting embodiment of a pultrusion equipment and process for making an elongated body, such as a profile, from at least partially recycled material is now disclosed. A detailed description of a profile for example of the type obtainable by said equipment and/or process is also provided.

This description refers to the attached drawings in which:
- Figure 1 schematically shows pultrusion plant for making profiles operating according to the process of the present invention;
- Figure 2 shows schematically and in perspective a laminar body comprising recycled material that may be used in the plant of figure 1 for the production by pultrusion of profiles, according to aspects of the present invention
- Figure 3 is an enlarged longitudinal section, taken according to section plane III-III, of the laminar body in Figure 2; and
- Figures 4 through 6 each show a cross section of a respective profile obtainable with the pultrusion plant of Figure 1.

### DEFINITIONS AND CONVENTIONS

Note that in this detailed description corresponding parts illustrated in the various figures are shown with the same numerical references. The figures may illustrate the subject matter of the invention by means of representations that are not to scale; therefore, parts and components illustrated in the figures related to the subject matter of the invention may relate only to schematic representations.

### CONTROL UNIT

The control unit 100 referred to in the following description may comprise a single central unit that handles the functions described below or a plurality of units, such as interconnected units, each configured to handle a respective part of the functions described below.

Control unit 100 may be of the digital type and include, or be connected with, one or more memories designed to store one or more programs that when executed by the control unit 100 configure the unit to perform one or more of the functions described below.

Alternatively, the control unit 100 may be of the analog type and thus with electronic circuitry configured to perform one or more of the functions described below.

Con troll unit 100 may, in a further alternative, combine a digital part and an analog part.

### DETAILED DESCRIPTION

In the following it is first described a pultrusion equipment or plant for making pultruded profiles, then a process for making pultruded profiles, and finally a pultruded profile, for example obtainable with said equipment and/or process.

### PULTRUSION PLANT

With reference to the figures mentioned above, a plant for making pultruded profiles in accordance with aspects of the invention is globally denoted as number 1.

The plant 1 includes one or more feeding unit(s) 2 of reinforcement fibers new 3: e.g., such unit(s) may be provided with one or more creels equipped with reinforcement fiber spools 2a from which filaments of new fiber 3 are unwound continuously, forming bundles of essentially unidirectional fibers 4; alternatively or additionally, the feeding unit(s) may include one or more feed rolls (not shown) arranged to feed reinforcement fibers in the form of one or more continuous mats, one or more continuous fabrics, or one or more continuous woven-nonwoven (mat) fabrics.

Reinforcement fibers 3 are new and continuous reinforcement fibers, such as consisting of glass fibers, carbon fibers, boron fibers, basalt fibers, aramid fibers, natural fibers, or other reinforcement fibers yet or combinations of the types of fibers just described.

New continuous reinforcement fibers 3, in one or more of the forms described above, are fed to one or more impregnation stations 5 where liquid polymerizable resin 6 is applied (e.g., by dipping, injection, spraying, or other techniques) to the reinforcement fibers.

Liquid polymerizable resin 6 includes one or more polymerizable synthetic resins and/or one or more polymerizable natural resins. For example, polymerizable resin may include thermoplastic resin or thermosetting resin.

The reinforcement fibers 3, once impregnated, proceed out of the impregnation station 5 and may come to a station to adjust the amount of resin applied 7 (e.g., one or more combs or other adjustment systems may be used to remove any excess liquid polymerizable resin). Subsequently, an additional polymerizable resin application station 8 may be provided if there is a need to make an addition of resin or additional finishing of the amount of resin applied. The impregnated reinforcement fibers then reach at least one pultrusion die 9 (multiple pultrusion dies may evidently be provided, for example, arranged in parallel if more than one profile is to be made at the same time; series pultrusion dies may also be provided if the profile forming is to be done in successive stages).

Downstream of the pultrusion die 9, the formed profile 10 reaches a pulling station 11 (e.g. comprising one or more motorized rollers 12 active on the surface of the profile 10), which, during the pultrusion process, continuously pulls the formed profile from downstream from the die 9.

A crosslinking or crosslinking finalization station 13 (at least part of the crosslinking of the polymer resin does in fact take place within the pultrusion die(s)) may also be provided between the pulling station and the pultrusion die, for example including one or more lamps for the emission of radiation, such as actinic radiation e.g., UV.

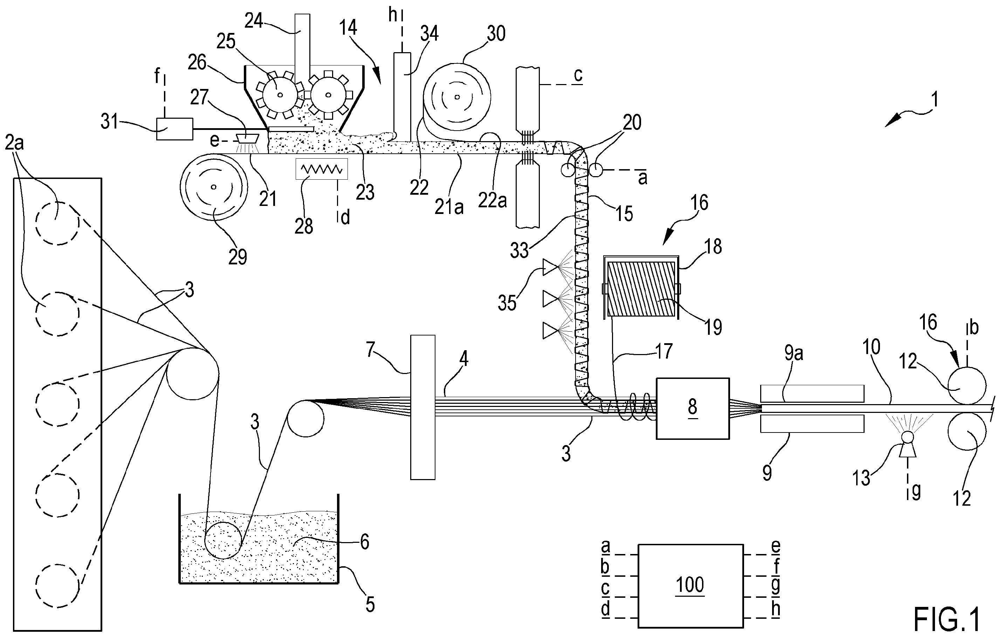

In accordance with another aspect, the plant 1 also includes at least one feed line 14 of a laminar body 15 made of at least partially recycled material that provides for the movement of such laminar body 15 to the pultrusion die 9. For example, the feed line 14 is configured to continuously feed the laminar body 15 to the pultrusion die 9 at the same time as new reinforcement fibers 3 from the mentioned one or more feed units 2, so that the laminar body and new reinforcement fibers arrive at the pultrusion die at the same time. In the example shown (see, for example, Figure 1), it can be seen that the new reinforcement fibers 3 arrive at the pultrusion die together with the laminar body 3, so that both the new reinforcement fibers 3 and the laminar body 15 extend longitudinally along the entire elongated or profiled body 10 exiting the pultrusion die 9. Note that although Figure 1 schematically shows a single bundle 4 of fibers 3, it is possible to envisage that plant 1 will feed several bundles of new reinforcement fibers simultaneously to the pultrusion die, arranging the fibers in each bundle appropriately with respect to the laminar body(s) arriving at the same pultrusion die. If in addition or alternatively the fibers are fed in the form of one or more woven or nonwoven webs, such one or more webs are simultaneously moved to pass through the pultrusion die.

It should also be noted that the system may also include one or more auxiliary feeding units 16 of additional new reinforcement fibers 17 that may be arranged according to one or more helical windings around the new reinforcement fibers 3 described above and around the laminar body 15. For example, each of the auxiliary feeding units 16 may include a rotating support structure 18 configured for turning around the fibers 3 coming from the feeding unit or units; the rotating support structure may be equipped with one or more feeding spools 19 of fibers intended to be arranged according to respective helical windings. These additional fibers are useful, for example, in the fabrication of tubular profiles or hollow posts that must therefore resist not only axial stresses but also stresses directed transverse to the axis of the profile.

Returning now to the description of the feed line 14 of the laminar body 15, it should be noted that, in cases where the laminar body is preformed, the feed line itself may include one or more possibly motorized rollers 20 configured for unwinding the laminar body from a feed coil or for picking up the laminar body from an accumulator station (not shown in Figure 1) of laminar body or bodies. Note that alternative means of feeding the laminar body to the pultrusion die, such as gripper systems active on the longitudinal edges of the laminar body, conveyor belts, or others, may be provided as an alternative to the motorized rollers 20.

Alternatively (as shown in Figure 1), the laminar body 15 may be produced in-line from one or more containment layers 21, 22 and from recycled material 23 obtained by crushing composite material (e.g., composite material with thermosetting polymer resin matrix); the recycled material 23 includes recycled fibers, recycled polymer particles, and frequently also polymer particles embedding recycled fibers or carrying recycled particles attached thereto. The recycled fibers and particles are evidently very small coming from the crushing of composite material. Polymer particles may have very fine grain size. For example, the particle size of polymer particles may be such that 95 percent by weight of the polymer particles present diameter between 1 and 2000µm, particularly between 1.5 and 1000µm. Fibers are also reduced to very short fibers, e.g., such that 95% by weight of fibers present length between 0.1 and 20 mm, particularly between 0.15 and 10 mm.

The particle size of polymer powders can be measured with the particle size analyzer, mod. *MASTERSIZER* 2000 from Malvern Instrument Ltd (UK), which exploits the diffraction of two light sources generated by a powerful He/Ne laser (red beam of 633 nm wavelength) and a laser diode (blue beam of 450 nm wavelength), respectively. The measuring range of the particle size analyzer in question is 0.02÷ 2000µm for suspensions and emulsions and 0.26÷ 2000µm for airborne dust. The Mastersizer 2000 analyzer uses the laser diffraction technique to measure particle size. The measurement system basically consists of three main elements: the optical bench, the sample dispersion unit, and the software. The dispersed sample passes through the measurement zone of the optical bench, where a laser beam illuminates the particles. An array of detectors then accurately measures the intensity of light scattered by the particles within the sample over a wide range of angles. The dispersion of the sample is controlled by dispersion units: wet and dry. The units ensure that the particles reach the measurement area of the optical bench at the correct concentration and in a stable state of dispersion. Finally, the Mastersizer 2000 software controls the system during the measurement process and analyzes the scattering data to calculate a particle size distribution. The sample is usually dispersed in an appropriate liquid or in air. In the former case, a few drops are taken from the suspension subjected to ultrasonication and introduced into the measurement cell, while in the latter case, the powder-air dispersion is passed directly into the range of the beam. Depending on the dispersion mode, in liquid or in air, the corresponding sampling unit is used: accessory HYDRO or SCIROCCO. Please also refer to ISO 3679:2015 method - atmospheric pressure measurement conditions.

Scanning light microscopy or phase-contrast optical microscopy can be used to measure the length of fibers.

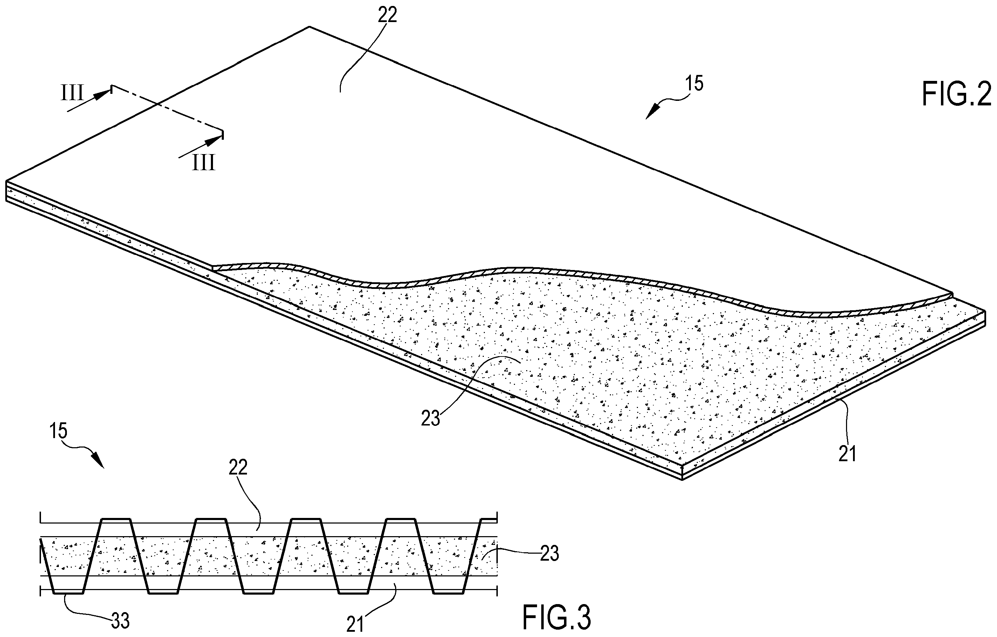

As visible from Figure 1, the used composite material 24 is fed to a shredder 25 that forms the recycled material 23 described above. After that, the recycled material, collected in a hopper 26 for example, is placed on one side of the containment layer 21. A glue applicator 27 may be provided that distributes glue on the recycled material and/or the exposed surface of the side of the containment layer on which the recycled material is laid in order to stably bind the recycled material to the same side of the containment layer. Alternatively or in addition to the application of glue to the recycled material and/or the application of glue to the containment layer, the use of a heater 28 that results in melting or softening of at least a portion of the recycled material and/or at least a portion of the containment layer so as to result in a hot coupling of part of the recycled material with the exposed surface of the connecting side of the containment layer may be contemplated. As visible in Figures 1-3, the construction of the laminar body 15 may also involve associating the containment layer 21 with an auxiliary containment layer 22 so that the recycled material 23 is interposed between the containment layer 21 and the auxiliary containment layer 22.

In the example shown in Figure 1, plant 1 provides for the containment layer and the auxiliary containment layer 21 and 22 (e.g., unrolled from respective feed reels or rollers 29, 30) to be driven appropriately so that they are arranged in a mutually overlapping relationship and thus coupled together. More specifically, plant 1 provides for the handling of containment layer 21, which, for example, is pulled by appropriate feed means (motorized rollers, or grippers, or conveyor belts, or other still) and is unrolled by respective feed roller 29 by arranging an unrolled section 21a of containment layer 21 along a feed plane. As mentioned above, recycled material 23 from, for example, the collection hopper 26 optionally equipped with an appropriate feeder 31 is distributed over the unrolled section of the containment layer. At the same time, the auxiliary containment layer 22 is moved, e.g., by appropriate feed means (motorized rollers, or grippers, or conveyor belts, or other means), and is unrolled from the respective feed roller 30 so that an unrolled section 22a of the auxiliary containment layer is arranged above the distributed recycled material on the unrolled section 21a of the containment layer. Plant 1 then couples containment layer 21 and auxiliary containment layer 22 together. For this purpose, the plant 1 includes a bonding station 32, equipped, for example, with a stapler and/or a welding head and/or a glueing head, which provides for bonding the unrolled section 22a of the auxiliary containment layer with the unrolled section 21a of the containment layer along one or more connecting lines 33 creating, depending on the connection technique used one or more seam lines, one or more heat-sealing lines, and/or one or more glueing lines arranged at least longitudinally along the containment layer and the auxiliary containment layer. By making seams and/or heat-sealing and/or bonding between the containment layer and the auxiliary containment layer, the positional stability of the recycled material inside the laminar body and the effective joining of the two containment layers are simultaneously ensured. It should be noted that, as shown in Figure 1, instead of or in addition to dedicated advancement means for layer 21 and/or state 22, motorized rollers 20 active on the already formed part of laminar body 15 are used as synchronous advancement means of both containment layers 21 and 22, since the formed part of laminar body 15 is also connected with the tracts of the individual containment layers 21 and 22 located upstream of bonding station 32. The advancing means 20 active on each of the layers 21 and 22 and/or on the formed laminar body may be motorized rollers, or grippers, or conveyor belts, or whatever, and be managed appropriately to allow for the proper formation and advancing of the laminar body itself.

It should be noted that system 1 also includes a control unit 100 communicatively connected with the pulling station 11, bonding station 32 and feed means 20 described above and capable of controlling the bonding station and feed means so that the formation of the laminar body and its movement to the pultrusion die 9 occur in a synchronized manner with the advancement of new reinforcement fibers. Control unit 100 can also be communicatively connected and control the crosslinking station 13, shredder 25, glue applicator 27, heater 28 and dispenser 31.

Plant 1 may be configured so that when depositing the recycled material 23 on the containment layer 21, a step of adjusting a deposition height of the recycled material is carried out. For this purpose, the plant 1 and, in particular, the control unit 100 may be active on:
- the feed means 20 of the containment layer to adjust a feed rate of said unrolled section of the containment layer itself, and/or
- the feeder 31 associated with the hopper to adjust a deposition rate of the recycled material on the containment layer, and/or
- the position of a thickness controller 34 (e.g., a doctor blade whose distance from the surface of the containment layer can be varied) operatively active on the recycled material deposited on the containment layer to determine a maximum thickness of the recycled material.

According to a further aspect, plant 1 is also equipped with one or more wetting stations 35 of the laminar body with liquid polymerizable resin (e.g., comprising resin sprayers as shown in Figure 1): it should be noted that as an alternative to or in addition to the wetting stations 35, the plant can be expected to move the laminar body 15 to the impregnation station 5 where that body is impregnated with liquid polymerizable resin, which in the currently preferred embodiment is the same liquid polymerizable resin (i.e., has the same composition as liquid polymerizable resin) used for impregnating new reinforcement fibers. In order to allow the liquid polymerizable resin to pass through the laminar body 15, containment layer 21 is configured to allow the liquid resin to pass through while preventing the recycled material from passing through; for example, the containment layer 21 is a porous material or provided with through openings such as a fabric (e.g., formed of plastic fibers or fibers of glass or carbon or other nature), a nonwoven fabric (e.g., formed of plastic fibers or fibers of glass or carbon or other nature), a plastic grid film, a metal grid film, a plastic mesh, a metal mesh. Similarly, auxiliary containment layer 22, if present, can be configured to allow the liquid resin to pass through while preventing the recycled material from passing through; in a currently preferred variant, the auxiliary containment layer may be a porous material or provided with through openings such as a woven fabric (e.g., formed from plastic fibers or glass or carbon fibers or other still), a nonwoven fabric (e.g., formed from plastic fibers or glass or carbon fibers or other still), a plastic grid film, a metal grid film, a plastic mesh, a metal mesh. It should be noted that due to the porosity of the containment layer and any auxiliary containment layer of the laminar body and due to the fact that the shredded recycled material within the laminar body leaves gaps between the polymer particles and the shredded fibers, the liquid resin impregnates the said layer or layers and occupies the gaps present in the shredded recycled material.

Containment layer 21 and, if present, auxiliary containment layer 22 are thin bodies: the grammage of each of layers 21 and 22 can be between 10 and 300 grams per m². The thickness of each of these layers is enormously less than the other two dimensions and, for example, can vary between 0.05 mm and 3 mm. The overall thickness of laminar body 15, substantially due to the presence of recycled material 23 arranged between containment layer 21 and auxiliary containment layer 22 can, depending on the application range from 0.5 mm to 50 mm, optionally 1 to 5 mm.

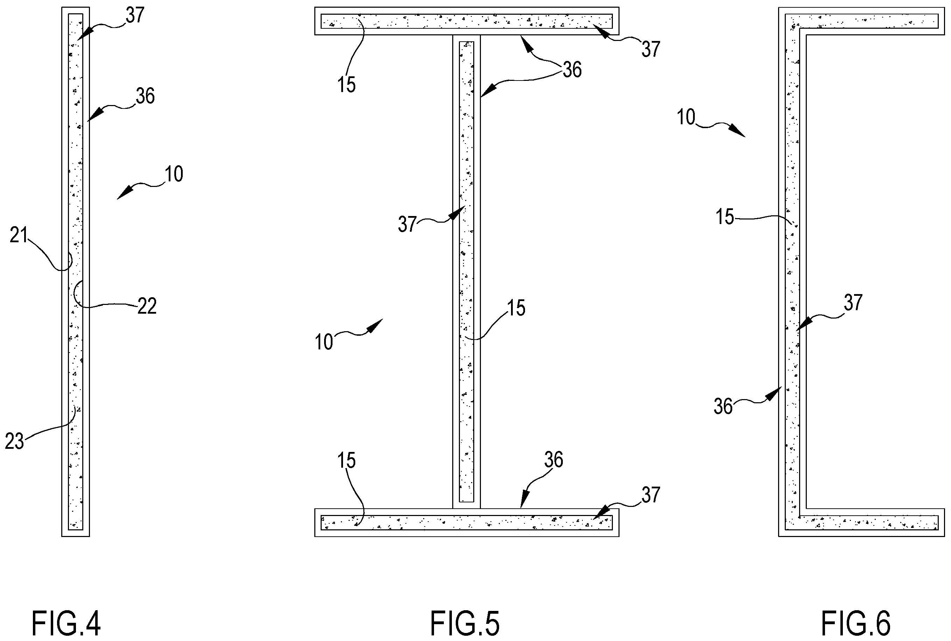

Note how the above plant illustratively describes the production of a profile wherein only one laminar body is inserted (the section of this profile is, for example, shown in Figures 4 and 6). However, it is not ruled out that the plant may produce profiles with multiple laminar bodies (fed simultaneously to pultrusion die 9) each of which extends longitudinally substantially along the whole or along a prominent portion of the profile and arranged at a respective area of the section of the profile (e.g. in figure 5 one laminar body is arranged at a central core and two other laminar bodies at wings transversely arranged with respect to the central core of the profile).

### PULTRUSION PROCESS

Following what has been described in relation to plant 1, a pultrusion process is now presented for the production of an elongated body, such as a profile 10, from composite material.

By way of example, the process described here uses plant 1, although this process could be put in place using plants other than the one shown here. The process involves feeding new reinforcement fibers 3 from feed unit(s) 2 to impregnation station 5 where fibers 3 are impregnated with liquid polymerizable resin 6 resulting in impregnated new reinforcement fibers. At the same time, the process involves moving the above-described laminar body 15 in at least partially recycled material to the same impregnation station 5 or to a dedicated wetting station 35, which allows a polymer resin (e.g., the same liquid polymer resin used to impregnate said new reinforcement fibers) to insert itself into, and impregnate, laminar body 15.

Then the laminar body 15 impregnated with resin and the new reinforcement fibers 3 impregnated with resin proceed to the pultrusion die 9, so that within the pultrusion die the new impregnated fibers are placed adjacent to the laminar body. As an alternative to the above, it is possible to provide for the laminar body 15 to reach the pultrusion die without having been previously impregnated with liquid polymer resin, and for this impregnating step to take place within die 9 (or in a pre-die) by using any excess resin present on reinforcement fibers 3 or by injecting additional liquid polymer resin into pultrusion die 9.

As already indicated in the plant description part, in order to allow efficient impregnation of the laminar body 15, the containment layer 21 and, if present the auxiliary containment layer 22, are configured to allow the liquid resin to pass through while preventing the recycled material from passing through. For example, the containment layer and, if present, the auxiliary containment layer are made of a porous material or provided with through openings such as a woven fabric, nonwoven fabric, a plastic grid film, a metal grid film, a plastic mesh, a metal mesh.

Next, the process involves at least partially solidifying the liquid polymerizable resin by forming, as it exits the pultrusion die, an elongated body or profile 10 in the solid state whose cross-sectional area corresponds to the cross-sectional area of the exit opening from the pultrusion die 9. As mentioned above, the pultrusion die internally includes a forming cavity 9a configured to shape the elongated body during the pultrusion process: the steps of moving the new impregnated reinforcement fibers and the laminar body to the pultrusion die are configured to arrange, internally to the forming cavity 9a, the new impregnated reinforcement fibers 3 perimetrally to the laminar body 15. For example, the new impregnated reinforcement fibers 3 are arranged, inside the pultrusion die 9, to completely envelop laminar body 15 so that the elongated body 10, as it exits the pultrusion die, has cross section wherein the laminar body 15 is completely encapsulated by the reinforced polymer matrix formed by said new impregnated reinforcement fibers.

The forming cavity 9a of the pultrusion die 9 may have a symmetrical profile in cross section: in such a case, the laminar body crosses the forming cavity arranging itself centrally with respect to the profile of the forming cavity itself; optionally, the laminar body crosses the forming cavity 9a arranging itself symmetrically with respect to said profile of the forming cavity itself.

Downstream of the mold 9 the elongated body or profile 10 is sufficiently solid and may be pulled by appropriate means 11 as described above and then reach a transverse cutting station (not shown) where the continuous elongated body forms profiles of predetermined longitudinal extent.

As can be seen from the example sections in Figures 4-6, the elongated body or profile 10 extracted from the pultrusion die 9 has profile conformation with uniform cross section (i.e., of constant size and shape along the development of the profile). In accordance with one aspect, such uniform cross section includes:
- at least one first zone 36, wherein new reinforcement fibers embedded in polymerizable resin-formed matrix are arranged,
- at least one second zone 37 comprising the laminar body 15 (wherein there is polymerizable resin-formed matrix); the second zone is, for example, a central zone completely surrounded, seamlessly, by the first zone 36, which therefore is or comprises a perimeter zone of the profile; in the joined Figures 4 and 6, the first zone 36 has an annular outline closed around the central zone 37 where the laminar body 15 is arranged.

Following said solidification step of the liquid polymerizable resin, the polymer matrix present inside the laminar body is interconnected (i.e., rigidly connected by polymerization) with the polymer matrix of the perimeter zone.

Returning to the feeding of the new 3 reinforcement fibers and laminar body 15, it should be noted that in accordance with one aspect of the pultrusion process described here, the new 3 reinforcement fibers are fed continuously to the pultrusion die 9 so that they extend, optionally parallel to each other, throughout the elongated or profiled body 10 extracted from the pultrusion die. For example, new reinforcement fibers 3 (which as mentioned above can be glass fibers, carbon fibers, boron fibers, basalt fibers, aramid fibers, natural fibers, or combinations thereof) may be fed in the form of:
- bundles of fibers, such as unidirectional bundles of fibers, or
- fibers mats, or
- fibers fabrics, or
- nonwoven fabrics of fibers, or
- combinations of the above.

In turn, the laminar body 15 is continuously fed to the pultrusion die 9 at the same time as the new reinforcement fibers 3, so that the laminar body extends longitudinally along the entire elongated or profiled body 10 exiting the pultrusion die 9. As mentioned above, the laminar body used in the process can be a prepackaged laminar body or it can be formed continuously during the pultrusion process. In any case, the preparation of the laminar body involves crushing, optionally by mechanical grinding, one or more composite waste products to obtain the recycled material. As explained above, such recycled material obtained by crushing composite material includes recycled fibers, recycled polymer particles, with possibly some particles embedding, or being connected to, recycled fibers; the polymer particles may have very fine grain size. For example, the particle size of the polymer particles may be such that 95% by weight of the polymer particles present diameter between 1 and 2000µm, particularly between 1.5 and 1000µm. Fibers are also reduced to very short fibers i.e. such that 95% by weight of the fibers present length between 0.1 and 20 mm, particularly between 0.15 and 10 mm.

The recycled material is laid on one side of containment layer 21, and optionally bonded to that side of containment layer 21 by application of glue to the recycled material, application of glue to the containment layer, melting of at least a part of the recycled material, or melting of at least a part of the containment layer, as already described in the description part for plant 1.

In accordance with one aspect, the laminar body 15 includes an auxiliary containment layer 22 that is associated with the containment layer 21, so that recycled material is interposed between the containment layer and the auxiliary containment layer; in practice, the containment layer and the auxiliary containment layer are arranged in a mutually overlapping relationship, and coupled together (as already described in the plant 1 part of the description) to progressively form the laminar body that is then sent to the pultrusion die.

The step of depositing the recycled material may also include a step of adjusting a deposition height of the recycled material by control (by the control unit described above) of one or more of:
- a forward speed of said unrolled section of the containment layer,
- a rate of deposition of the recycled material on the containment layer,
- a position of a thickness controller 22 of the recycled material deposited operationally active on the recycled material deposited on the containment layer to determine a maximum thickness.

As already mentioned, once the laminar body (or multiple laminar bodies) 15 is made in-line (or made available elsewhere i.e., pre-packaged), it is properly guided and positioned relative to the new reinforcement fibers 3 depending on the profile 10 to be obtained and then sent to the pultrusion die 9 where the elongated body or profile 10 is formed.

As already mentioned for plant 1, note how the process shown above exemplifies the production of a profile in which only one laminar body is inserted (the section of such a profile is, for example, shown in Figure 4 and Figure 6). However, it is not excluded that the plant may produce profiles with multiple laminar bodies (fed simultaneously to the pultrusion die 9) each of which extends longitudinally substantially along the whole or along a prominent portion (i.e., a portion longer than 50% of the total length of the profile) of the profile and arranged at a respective area of the section of the profile; for example, in Figure 5 one laminar body is arranged at a central core and another two laminar bodies at wings transversely arranged with respect to the central core of the profile.

### PULTRUDED PROFILE

In accordance with another aspect of the invention, a pultruded profile 10 made of composite material is now described. The pultruded profile 10 described below can be obtained using the plant 1 and/or the process shown above. In the following, reference will be made by way of example to a pultruded profile obtained using plant 1 and the process illustrated above.

Composite pultruded profile 10 includes the elongated body formed by pultrusion die 9. Such an elongated body typically has a cross section of constant shape and size along the longitudinal development of the profile. In accordance with one aspect of the invention the profile cross section (optionally each profile cross section) includes:
- at least one first zone 36, in which new reinforcement fibers embedded in new polymer matrix are arranged, and
- at least one second zone 37 including the above-described laminar body 15 made of at least partially recycled material.

Note how in each profile there may be only one laminar body inserted (example in Figure 4 and Figure 6) or there may be several laminar bodies (example in Figure 5) each extending longitudinally substantially along the whole or along a prominent portion (longer than 50% of the profile length) of the profile and arranged at a respective area of the profile section (e.g. in Figure 5 one laminar body is arranged at a central core and two other laminar bodies at wings transversely arranged with respect to the central core of the profile).

In more detail, the (or each) laminar body 15 includes as mentioned above the containment layer 21 and recycled material 23 arranged on one side of the containment layer. The laminar body may also include an auxiliary containment layer 22, opposed to the containment layer and coupled to the containment layer itself, so that recycled material is interposed between the containment layer and the auxiliary containment layer. As explained above, such recycled material is obtained by crushing composite material and includes recycled fibers (see above for polymer particle sizes and short fibers); possibly polymer the or some particle(s) may incorporate or be connected with recycled fibers. Following the manufacturing process described above, the laminar body also incorporates new polymer matrix, optionally obtained from the same liquid polymerizable resin that forms the polymer matrix of the first zone.

The new polymer matrix in each second zone 37, present within each laminar body 15, pervades and impregnates the containment layer 21 and where present the auxiliary containment layer 22 in addition to pervading the recycled material 23 present within the laminar body 15. In this way, the new polymer matrix present in each laminar body 15 not only consolidates the latter, but is also connected with the polymer matrix of the first zone 36.

In terms of overall dimensions, referring to a profile such as that in Figure 4 or Figure 6 wherein only one laminar body is used (which in Figure 4 is laid out flat while in Figure 6 has wings folded to form a "C" profile) the first zone preferably has cross-sectional area measuring than that of the second zone. In more detail, the first zone has cross-sectional area of between 30 and 70 percent relative to the total cross-sectional area of the elongated body, while the second zone has a cross-sectional area of between 20 and 80 percent relative to the total cross-sectional area of the elongated body. Similarly, in solutions where several, optionally flat, laminar bodies are used, each at a respective zone of the profile cross-section (see Figure 5), the sum of the cross-sectional area of all first zones is less than the sum of the cross-sectional areas of all second zones. In more detail, the first zones have a total cross-sectional area of between 30 and 70 percent relative to the total cross-sectional area of the elongated body, while the second zones have a total area of between 20 and 80 percent relative to the total cross-sectional area of the elongated body.

In accordance with one aspect, the second zone 37 (or each second zone) is completely encapsulated by the newly reinforced polymer matrix of the first zone 36 (or of each respective first zone), which, as noted above, contacts and is connected with the polymer matrix of the second zone 37.

As shown in Figures 4-6, the profile cross-section may be of various types: for example, "I" shaped, "C" shaped, "T" shaped, "├" shaped, "Π" shaped, "O" shaped, or other shapes as required. In any case, in accordance with one aspect of the invention, the first zone 36 is or comprises a perimeter zone of the cross-section of the profile, in which the new reinforcement fibers embedded in the new polymer matrix are arranged; the second zone 37 is or comprises a central zone of the cross-section completely surrounded, seamlessly, by the first perimeter zone 36. In case profiles 10 have a closed profile cross-section, e.g., tubular profiles with a circular or oval or polygonal profile cross-section, the first zone 36 may comprise two half-zones: one arranged radially inside, and one arranged radially outside the second zone, which is thus interposed between the two half-zones.

The second zone 37, or core zone, comprises laminar body 15 in which new polymerizable matrix, optionally formed by the same polymerizable resin forming matrix as in the first zone, is present; the new polymerizable matrix present in the first zone 36 is preferably connected with the new polymerizable matrix present in the second zone. In detail, the new polymer matrix in the laminar body 15 occupies the interstices present in the recycled material and fits into the porosities or openings of the containment layer (as well as into the porosities or openings of the auxiliary containment layer if present) creating a compact laminar body.

In fact, the containment layer 21 and if present the auxiliary containment layer 22 are configured to allow the liquid polymerizable resin intended to form the new polymer matrix present in the laminar body 15 to pass through, while preventing the recycled material from passing through, which therefore remains confined in the laminar body. For example, the containment layer 21 and if present the auxiliary containment layer 22 are made of a porous material or provided with through openings such as optionally a woven fabric, a nonwoven fabric, a plastic grid film, a metal grid film, a wire mesh, or a plastic mesh.

In summary then, due to the porosity of the containment layer 21 and the auxiliary containment layer 22 (if any) of the laminar body 15 and due to the fact that the recycled material 23 chopped within the laminar body 15 leaves interstices between the polymer particles and the chopped fibers the liquid resin in the production of the elongated body/profile impregnates the containment layer and optionally the auxiliary containment layer and fits into the interstices present in the recycled material. Thus, as mentioned above, the new polymer matrix present in the first zone and the second zone that results from the solidification of the polymerizable liquid resin (e.g., one and the same polymerizable resin for the first and second zones 36 and 37) is interconnected (and chemically bonded by virtue of the resin solidification).

As for the arrangement of the new reinforcement fibers, they extend along the entire elongated body/profile 10 (occupying as mentioned above the first zone(s)) and may be in the form of unidirectional bundles of fibers oriented along a longitudinal axis of prevailing pultruded profile development, fiber mats in which part of the fibers are oriented along the longitudinal axis of prevailing pultruded profile development and part of the fibers are oriented transverse to said prevailing longitudinal axis of the pultruded profile, or fiber fabrics in which part of the fibers are oriented along the longitudinal axis of prevailing pultruded profile development and part of the fibers are oriented transverse to said prevailing longitudinal axis of the pultruded profile. In connection with materials, the new reinforcement fibers are, for example, glass fibers, carbon fibers, boron fibers, basalt fibers, aramid fibers, natural fibers or combinations thereof.

Further variations: in the examples shown, the elongated body extracted from the pultrusion die (and thus the profile obtained from the pultrusion process-see Figures 4-6) has uniform cross section with:
- a first zone, in which new reinforcement fibers embedded in polymeric matrix formed by said polymerizable resin are arranged,
- a second zone completely surrounded, seamlessly, by the first zone, wherein said the second zone comprises the laminar body in which there is polymerizable matrix formed by said polymerizable resin.

However, it is possible for the second zone to be arranged adjacent to the first zone but not completely surrounded by it: for example, the second zone may face one side of the profile and define a surface of the profile.

## Claims

1. Pultrusion process for manufacturing an elongated body, optionally a profile, from composite material, said process comprising the following steps:
- supplying new reinforcement fibers (3) to an impregnation station (5);
- impregnating with liquid-curable resin (6) the new reinforcement fibers (3) at the impregnation station (5) forming new impregnated reinforcement fibers;
- moving a laminar body (15) made of at least partially recycled material to a pultrusion die (9), said laminar body (15) having:
∘ a containment layer (21), and
∘ recycled material (23) optionally obtained by crushing composite material, said recycled material (23) including recycled fibers and recycled polymer particles, said recycled material (23) being arranged on one side of the containment layer (21);
- moving said new impregnated reinforcing fibers toward the pultrusion die (9) so that within the pultrusion die (9) the new impregnated fibers sit adjacent to the laminar body (15);
- solidifying at least partially said liquid-curable resin (6), forming an elongated body (10) in the solid state at the exit of the pultrusion die (9).

2. Process according to claim 1, wherein the pultrusion die (9) internally comprises a forming cavity (9a) configured to shape the elongate body during the pultrusion process, and wherein the steps of moving the new impregnated reinforcing fibers and the laminar body (15) to the pultrusion die (9) are configured to arrange, internally to the forming cavity (9a), the new impregnated reinforcing fibers perimetrally to the laminar body (15).

3. Process according to claim 2, wherein the new impregnated reinforcement fibers are arranged, inside the pultrusion die (9), so as to completely envelop the laminar body (15);
in which the elongated body (10), as it exits the pultrusion die (9), has a cross section in which the laminar body (15) is completely encapsulated by a reinforced polymer matrix formed by said newly impregnated reinforcing fibers;
optionally wherein the process involves moving two or more laminar bodies (15) of at least partially recycled material to the pultrusion die (9) and wherein the new impregnated reinforcing fibers are arranged, within the pultrusion die (9), so as to completely envelop each laminar body (15); and wherein the elongated body (10), exiting the pultrusion die (9), has cross-sectional area in which each laminar body (15) is completely encapsulated by a reinforced polymer matrix formed by said new impregnated reinforcing fibers.

4. Process according to any one of the preceding claims, wherein there is a step of wetting the/each laminar body (15) with liquid-curable resin, optionally wherein the wetting step includes impregnating the/each laminar body (15) with liquid-curable resin (6) at the impregnation station (5); and
wherein the liquid-curable resin used in said wetting step has the same composition of the liquid-curable resin used for impregnation of new reinforcement fibers (3).

5. Process according to any one of the preceding claims 2 to 4, wherein said forming cavity (9a) exhibits in cross-section a symmetrical profile and wherein the/each laminar body (15) crosses the forming cavity (9a) positioning itself centrally with respect to said cavity profile, optionally wherein the/each laminar body (15) crosses the forming cavity (9a) positioning itself symmetrically with respect to said forming cavity profile;
optionally wherein the process involves introducing additional amounts of liquid-curable resin into said pultrusion die (9).

6. Process according to any one of the preceding claims, wherein the elongated body (10) extracted from the pultrusion die (9) has profile conformation with uniform cross section, said cross section having:
- a first zone (36), in which new reinforcing fibers embedded in polymer matrix formed by said polymerizable resin are arranged,
- a second zone (37) completely surrounded, seamlessly, by the first zone (36), the second zone (37) comprising the laminar body in which polymetric matrix formed by said polymerizable resin is present;
wherein, following said solidification step of the liquid curable resin, the polymer matrix of the second zone (37) present inside the laminar body (15) is interconnected with the polymer matrix of the first zone (36);
wherein:
- the first zone (36) has an area between 20 and 70 percent of the total cross-sectional area of the elongated body (10),
- the second area, in particular devoid of new reinforcing fibers, has a measurement area between 30 and 80 percent of the total cross-sectional area of the elongated body (10);
optionally wherein:
- the first zone (36) is a perimeter zone that has annular outline closed around the second zone (37) that is a central zone of the elongated body (10) under formation where the laminar body (15) is arranged; and
- the first zone (36) has area less than the second zone (37).

7. Process according to any one of the preceding claims, wherein new reinforcing fibers are continuously fed to the pultrusion die (9) so as to extend, optionally parallel to each other, along the entire elongate body extracted from the pultrusion die (9);
wherein the new reinforcing fibers are in the form of one between:
- unidirectional fiber bundles,
- one or more fiber mats,
- one or more tapes of nonwoven fiber fabric, or
- one or more tapes of fiber fabric,
optionally the new reinforcing fibers being glass fibers, carbon fibers, boron fibers, basalt fibers, aramid fibers, natural fibers or combinations thereof;
and wherein the/each laminar body (15) is continuously fed to the pultrusion die (9) at the same time as the new reinforcing fibers,
optionally wherein the laminar body (15) extends longitudinally along the entire elongated body (10) exiting the pultrusion die (9).

8. Process according to any of the preceding claims, comprising forming the/each laminar body (15) continuously during the pultrusion process;
wherein forming the/each laminar body (15) includes:
- crushing, optionally by mechanical grinding, one or more composite waste material artifacts to obtain said recycled material (23) comprising recycled fibers and recycled polymer particles;
- deposit the recycled material (23) on said side of the containment layer (21), and optionally bind the recycled material (23) to said side of the containment layer (21) by one or more of applying glue to the recycled material (23), applying glue to the containment layer (21), melting at least part of the recycled material (23), melting at least part of the containment layer (21).

9. Process according to the preceding claim, wherein forming the, or each, laminar body (15) includes:
- associating the containment layer (21) with an auxiliary containment layer (22) so that the recycled material (23) is sandwiched between the containment layer (21) and the auxiliary containment layer (22);
wherein associating the containment layer (21) with the auxiliary containment layer (22) includes:
- positioning the containment layer (21) and the auxiliary containment layer (22) in a mutually overlapping relationship, and
- coupling the containment layer (21) and auxiliary containment layer (22) together;
wherein during said step of associating the auxiliary containment layer (22) with the containment layer (21) the process includes the following steps:
- (a) moving the containment layer (21);
- (b) depositing the recycled material (23) on said side of the containment layer (21) while moving of the latter;
- (c) moving the auxiliary containment layer (22) above the containment layer (21) and the recycled material (23) deposited on the containment layer (21) itself;
and wherein:
- the step (a) of moving the containment layer (21) includes unrolling the containment layer (21) from a respective feed roller, arranging an unrolled section of the containment layer (21) along a feed plane,
- the step (b) of depositing the recycled material (23) involves distributing the recycled material (23) over said unrolled section of the containment layer (21),
- the step (c) of moving the auxiliary containment layer (22) involves unrolling the auxiliary containment layer (22) from a respective feed roller by arranging an unrolled section of the auxiliary containment layer (22) on top of the recycled material (23) distributed on the unrolled section of the containment layer (21);
optionally wherein coupling the containment layer (21) and auxiliary containment layer (22) together includes:
- (d) binding the unrolled section of the auxiliary containment layer (22) with the unrolled section of the containment layer (21) along one or more connecting lines, optionally obtained by glueing lines, heat-sealing lines, or stitching lines, arranged at least longitudinally along the containment layer (21) and the auxiliary containment layer (22);
even more optionally wherein steps (b) and (d) occur during said steps (a) and (c) to progressively form the/each laminar body (15) that is then sent to the pultrusion die (9); and wherein the step (b) of depositing additionally includes a step of adjusting a deposition height of the recycled material (23) by controlling one or more of:
- a speed said unrolled section of the containment layer (21),
- deposition rate of the recycled material (23) on the containment layer (21),
- a position of a thickness adjuster operatively active on the recycled material (23) deposited on the containment layer (21) to determine a maximum thickness thereof.

10. Process according to any of the preceding claims, wherein the containment layer (21) is configured to allow the liquid resin to pass through while preventing the recycled material (23) from passing through, optionally wherein the containment layer (21) is a porous material or provided with through openings such as a woven fabric, nonwoven fabric, cross-linked plastic film, cross-linked metal film, wire mesh, plastic mesh; and
wherein the auxiliary containment layer (22), if present, is configured to allow the liquid resin to pass through while preventing the recycled material (23) from passing through, optionally wherein the auxiliary containment layer (22) is a porous material or provided with pass-through openings such as a woven fabric, nonwoven fabric, cross-linked plastic film, cross-linked metal film, wire mesh, plastic mesh.

11. A pultruded profile made of composite material, optionally obtainable by the process according to any one of the preceding claims, comprising an elongated body (10) with a cross section having:
- a first zone (36), in which new reinforcement fibers embedded in new polymer matrix are arranged, and
- a second zone (37) comprising a laminar body (15); wherein the laminar body (15) includes at least partially recycled material, said laminar body (15) having:
∘ a containment layer (21) and
∘ recycled material placed on one side of the containment layer (21), wherein the recycled material is optionally obtained by crushing composite material and includes recycled fibers and recycled polymer particles;
and wherein the laminar body (15) also incorporates new polymer matrix.

12. Pultruded profile according to the preceding claim, wherein the first zone (36) is adjacent to and in contact with the second zone (37) and wherein the new polymer matrix of the second zone (37), present internally in the laminar body (15), is connected with the new polymer matrix of the first zone (36);
and/or
wherein the second zone (37) hosting the laminar body (15), is completely encapsulated by the new reinforced polymer matrix of the first zone (36); wherein:
- the first zone (36) is or includes a perimeter zone of the profile cross section, and
- the second zone (37) is an internal, optionally central zone, of the profile cross-section completely and surrounded by the first zone (36);
wherein said second zone (37) includes the laminar body (15) in which new polymer matrix formed by the same polymerizable resin forming polymer matrix of the first zone (36) is present.

13. Pultruded profile according to any one of claims 11-12, wherein the new reinforcing fibers include fibers that extend throughout the whole pultruded profile; and
wherein the new reinforcing fibers are in the form of one between:
- unidirectional bundles of fibers oriented along a longitudinal axis of predominant development of the pultruded profile,
- one or more fiber mats in which part of the fibers are oriented along the prevailing longitudinal axis of development pultruded profile and part of the fibers are oriented transverse to said prevailing longitudinal axis of the pultruded profile,
- one or more nonwoven fabrics of fibers in which part of the fibers are oriented along the prevailing longitudinal axis of development of the pultruded profile and part of the fibers are oriented transverse to said prevailing longitudinal axis of the pultruded profile; or
- one or more fiber fabrics in which part of the fibers are oriented along the prevailing longitudinal axis of development of the pultruded profile and part of the fibers are oriented transverse to said prevailing longitudinal axis of the pultruded profile;
optionally wherein the new reinforcing fibers are glass fibers, carbon fibers, boron fibers, basalt fibers, aramid fibers, natural fibers or combinations thereof.

14. A pultruded profile according to any one of claims 11-13, wherein:
- the laminar body (15) includes an auxiliary containment layer (22) coupled to the containment layer (21) such that recycled material is interposed between the containment layer (21) and the auxiliary containment layer (22);
- laminar body (15) includes one or more connecting lines between the containment layer (21) and the auxiliary containment layer (22), optionally achieved by glueing lines, heat-sealing lines, or seam lines, arranged at least longitudinally along the containment layer (21) and the auxiliary containment layer (22);
- the recycled material has constant thickness and is evenly distributed on the retaining layer;
and/or wherein:
- the containment layer (21) is configured to allow the liquid polymerizable resin intended to form the new polymer matrix present in the laminar body (15) to pass through, while preventing the recycled material from passing through;
- the containment layer (21) is made of a porous material or provided with pass-through openings such as optionally a woven fabric, nonwoven fabric, cross-linked plastic film, cross-linked metal film, wire mesh, plastic mesh;
- the auxiliary containment layer (22), if present, is configured to allow the liquid polymerizable resin intended to form the new polymer matrix present in the laminar body (15) to pass through, while preventing the recycled material from passing through; the auxiliary containment layer (22) is made of a porous material or provided with through openings such as optionally a woven fabric, nonwoven fabric, cross-linked plastic film, cross-linked metal film, wire mesh, or plastic mesh.

15. Pultruded profile according to any one of claims 11-14, wherein the first zone (36) has an area less than that of the second zone (37); wherein the first zone (36) has an area measuring between 30 and 70 percent with respect to the total cross-sectional area of the elongated body (10), while the second zone (37) has an area measuring between 20 and 80 percent with respect to the total cross-sectional area of the elongated body (10);
optionally wherein the cross-sectional area of the elongated body (10) has two or more of said first zones (36) and two or more of said second zones (37), each of the second zones being surrounded by a respective first zone, wherein the sum of the area of all the first zones (36) measures less than the sum of the areas of all the second zones (37), and wherein the first zones have a total area of between 30 and 70 percent relative to the total cross-sectional area of the elongated body (10), while the second zones have a total area of between 20 and 80 percent relative to the total cross-sectional area of the elongated body (10).

## Patentansprüche

1. Pultrusionsverfahren zum Herstellen eines länglichen Körpers, optional eines Profils, aus Verbundmaterial, wobei das Verfahren die folgenden Schritte umfasst:
- Zuführen neuer Verstärkungsfasern (3) zu einer Imprägnier-Station (5);
- Imprägnieren der neuen Verstärkungsfasern (3) an der Imprägnier-Station (5) mit flüssig-härtbarem Harz (6), wobei neue imprägnierte Verstärkungsfasern gebildet werden;
- Bewegen eines Laminarkörpers (15), welcher aus wenigstens teilweise recyceltem Material besteht, zu einem Pultrusionswerkzeug (9), wobei der Laminarkörper (15) aufweist:
∘ eine Eingrenzungslage (21), und
∘ recyceltes Material (23), welches optional durch Zerkleinern von Verbundmaterial gewonnen wird, wobei das recycelte Material (23) recycelte Fasern und recycelte Polymerpartikel umfasst, wobei das recycelte Material (23) auf einer Seite der Eingrenzungslage (21) angeordnet ist;
- Bewegen der neuen imprägnierten Verstärkungsfasern in Richtung des Pultrusionswerkzeugs (9), sodass innerhalb des Pultrusionswerkzeugs (9) die neuen imprägnierten Fasern benachbart zu dem Laminarkörper (15) angeordnet sind;
- wenigstens teilweises Verfestigen des flüssig-härtbaren Harzes (6), wobei an dem Ausgang des Pultrusionswerkzeugs (9) ein länglicher Körper (10) in dem festen Zustand gebildet wird.

2. Verfahren nach Anspruch 1, wobei das Pultrusionswerkzeug (9) innen einen Formhohlraum (9a) umfasst, welcher dazu eingerichtet ist, den längliche Körper während des Pultrusionsverfahrens zu formen, und wobei die Schritte des Bewegens der neuen imprägnierten Verstärkungsfasern und des Laminarkörpers (15) zu dem Pultrusionswerkzeug (9) dazu eingerichtet sind, die neuen imprägnierten Verstärkungsfasern innerhalb des Formhohlraums (9a) umfangsseitig zu dem Laminarkörper (15) anzuordnen.

3. Verfahren nach Anspruch 2, wobei die neuen imprägnierten Verstärkungsfasern innerhalb des Pultrusionswerkzeugs (9) derart angeordnet sind, dass sie den Laminarkörper (15) vollständig umhüllen;
wobei der längliche Körper (10), wie er das Pultrusionswerkzeug (9) verlässt, einen Querschnitt aufweist, in welchem der Laminarkörper (15) vollständig von einer verstärkten Polymermatrix eingekapselt ist, welche durch die neuen imprägnierten Verstärkungsfasern gebildet wird;
optional wobei das Verfahren das Bewegen von zwei oder mehr Laminarkörpern (15) aus wenigstens teilweise recyceltem Material zu dem Pultrusionswerkzeug (9) umfasst und wobei die neuen imprägnierten Verstärkungsfasern innerhalb des Pultrusionswerkzeugs (9) derart angeordnet sind, dass sie jeden Laminarkörper (15) vollständig umhüllen; und wobei der längliche Körper (10), welcher das Pultrusionswerkzeug (9) verlässt, eine Querschnittsfläche aufweist, in welcher jeder Laminarkörper (15) vollständig von einer verstärkten Polymermatrix eingekapselt ist, welche durch die neuen imprägnierten Verstärkungsfasern gebildet wird.

4. Verfahren nach einem der vorhergehenden Ansprüche, wobei ein Schritt des Benetzens des/jedes Laminarkörpers (15) mit flüssig-härtbarem Harz vorgesehen ist, optional wobei der Benetzungsschritt ein Imprägnieren des/jedes Laminarkörpers (15) mit flüssig-härtbarem Harz (6) an der Imprägnier-Station (5) umfasst; und
wobei das in dem Benetzungsschritt verwendete flüssig-härtbare Harz die gleiche Zusammensetzung aufweist wie das flüssig-härtbare Harz, welches zu der Imprägnierung der neuen Verstärkungsfasern (3) verwendet wird.

5. Verfahren nach einem der vorhergehenden Ansprüche 2 bis 4, wobei der Formhohlraum (9a) in einem Querschnitt ein symmetrisches Profil aufweist und wobei der/jeder Laminarkörper (15) den Formhohlraum (9a) durchläuft, indem er sich mittig in Bezug auf das Hohlraumprofil positioniert, optional wobei der/jeder Laminarkörper (15) den Formhohlraum (9a) durchläuft, indem er sich symmetrisch in Bezug auf das Formhohlraumprofil positioniert;
optional wobei das Verfahren ein Einbringen zusätzlicher Mengen an flüssig-härtbarem Harz in das Pultrusionswerkzeug (9) umfasst.

6. Verfahren nach einem der vorhergehenden Ansprüche, wobei der aus dem Pultrusionswerkzeug (9) entnommene längliche Körper (10) eine Profilgestalt mit gleichförmigem Querschnitt aufweist, wobei der Querschnitt aufweist:
- eine erste Zone (36), in welcher neue Verstärkungsfasern, welche in eine Polymermatrix eingebettet sind, welche durch das polymerisierbare Harz gebildet wird, angeordnet sind,
- eine zweite Zone (37), welche vollständig und nahtlos von der ersten Zone (36) umgeben ist, wobei die zweite Zone (37) den Laminarkörper umfasst, in welchem eine Polymermatrix vorhanden ist, welche durch das polymerisierbare Harz gebildet wird;
wobei nach dem Verfestigungsschritt des flüssig-härtbaren Harzes die Polymermatrix der zweiten Zone (37), welche innerhalb des Laminarkörpers (15) vorhanden ist, mit der Polymermatrix der ersten Zone (36) verbunden wird;
wobei:
- die erste Zone (36) eine Fläche aufweist, welche zwischen 20 und 70 Prozent der gesamten Querschnittsfläche des länglichen Körpers (10) beträgt,
- die zweite Fläche, welche insbesondere frei von neuen Verstärkungsfasern ist, eine Messfläche aufweist, welche zwischen 30 und 80 Prozent der gesamten Querschnittsfläche des länglichen Körpers (10) beträgt;
optional wobei:
- die erste Zone (36) eine Umfangszone ist, welche eine ringförmige Kontur aufweist, welche geschlossen um die zweite Zone (37) verläuft, welche eine zentrale Zone des länglichen Körpers (10) unter Bildung ist, in welcher der Laminarkörper (15) angeordnet ist; und
- die erste Zone (36) eine Fläche aufweist, welche kleiner ist als die zweite Zone (37).

7. Verfahren nach einem der vorhergehenden Ansprüche, wobei neue Verstärkungsfasern dem Pultrusionswerkzeug (9) kontinuierlich zugeführt werden, sodass sie sich, optional parallel zueinander, entlang des gesamten aus dem Pultrusionswerkzeug (9) entnommenen länglichen Körpers erstrecken;
wobei die neuen Verstärkungsfasern in einer der folgenden Formen vorliegen:
- unidirektionale Faserbündel,
- eine oder mehrere Fasermatten,
- ein oder mehrere Bänder aus nichtgewebtem Fasergewebe, oder
- ein oder mehrere Bänder aus Fasergewebe,
optional wobei die neuen Verstärkungsfasern Glasfasern, Kohlenstofffasern, Borfasern, Basaltfasern, Aramidfasern, Naturfasern oder Kombinationen davon sind;
und wobei der/jeder Laminarkörper (15) dem Pultrusionswerkzeug (9) gleichzeitig mit den neuen Verstärkungsfasern kontinuierlich zugeführt wird,
optional wobei sich der Laminarkörper (15) in Longitudinalrichtung entlang des gesamten länglichen Körpers (10) erstreckt, welcher das Pultrusionswerkzeug (9) verlässt.

8. Verfahren nach einem der vorhergehenden Ansprüche, umfassend ein kontinuierliches Bilden des/jedes Laminarkörpers (15) während des Pultrusionsverfahrens;
wobei das Bilden des/jedes Laminarkörpers (15) umfasst:
- Zerkleinern, optional durch mechanisches Mahlen, eines oder mehrerer Verbundmaterial-Abfallprodukte, um das recycelte Material (23) zu erhalten, welches recycelte Fasern und recycelte Polymerpartikel umfasst;
- Ablegen des recycelten Materials (23) auf der Seite der Eingrenzungslage (21), und optional Binden des recycelten Materials (23) an die Seite der Eingrenzungslage (21) durch eines oder mehreren aus einem Auftragen von Klebstoff auf das recycelte Material (23), einem Auftragen von Klebstoff auf die Eingrenzungslage (21), einem Aufschmelzen wenigstens eines Teils des recycelten Materials (23), einem Aufschmelzen wenigstens eines Teils der Eingrenzungslage (21).

9. Verfahren nach dem vorhergehenden Anspruch, wobei das Bilden des, oder jedes, Laminarkörpers (15) umfasst:
- Zuordnen der Eingrenzungslage (21) zu einer Hilfs-Eingrenzungslage (22), sodass das recycelte Material (23) zwischen der Eingrenzungslage (21) und der Hilfs-Eingrenzungslage (22) sandwichartig angeordnet ist;
wobei das Zuordnen der Eingrenzungslage (21) zu der Hilfs-Eingrenzungslage (22) umfasst:
- Positionieren der Eingrenzungslage (21) und der Hilfs-Eingrenzungslage (22) in einer gegenseitig überlappenden Beziehung, und
- Koppeln der Eingrenzungslage (21) und der Hilfs-Eingrenzungslage (22) miteinander;
wobei während des Schritts des Zuordnens der Hilfs-Eingrenzungslage (22) zu der Eingrenzungslage (21) das Verfahren die folgenden Schritte umfasst:
- (a) Bewegen der Eingrenzungslage (21);
- (b) Ablegen des recycelten Materials (23) auf der Seite der Eingrenzungslage (21) während die Eingrenzungslage (21) bewegt wird;
- (c) Bewegen der Hilfs-Eingrenzungslage (22) oberhalb der Eingrenzungslage (21) und des auf der Eingrenzungslage (21) selbst abgelegten recycelten Materials (23);
und wobei:
- der Schritt (a) des Bewegens der Eingrenzungslage (21) ein Abrollen der Eingrenzungslage (21) von einer jeweiligen Zuführrolle umfasst, wobei ein abgerollter Abschnitt der Eingrenzungslage (21) entlang einer Zuführebene angeordnet wird;
- der Schritt (b) des Ablegens des recycelten Materials (23) ein Verteilen des recycelten Materials (23) über den abgerollten Abschnitt der Eingrenzungslage (21) umfasst,
- der Schritt (c) des Bewegens der Hilfs-Eingrenzungslage (22) ein Abrollen der Hilfs-Eingrenzungslage (22) von einer jeweiligen Zuführrolle umfasst, indem ein abgerollter Abschnitt der Hilfs-Eingrenzungslage (22) auf dem recycelten Material (23) angeordnet wird, welches auf dem abgerollten Abschnitt der Eingrenzungslage (21) verteilt ist;
optional wobei das Koppeln der Eingrenzungslage (21) und der Hilfs-Eingrenzungslage (22) miteinander umfasst:
- (d) Binden des abgerollten Abschnitts der Hilfs-Eingrenzungslage (22) mit dem abgerollten Abschnitt der Eingrenzungslage (21) entlang einer oder mehrerer Verbindungslinien, welche optional durch Klebelinien, Wärmeabdichtungslinien oder Nählinien gebildet werden, welche wenigstens in Longitudinalrichtung entlang der Eingrenzungslage (21) und der Hilfs-Eingrenzungslage (22) angeordnet sind;
noch optionaler wobei die Schritte (b) und (d) während der Schritte (a) und (c) erfolgen, um den/jeden Laminarkörper (15) fortschreitend zu bilden, welcher dann dem Pultrusionswerkzeug (9) zugeführt wird; und wobei der Schritt (b) des Ablegens zusätzlich einen Schritt eines Einstellens einer Ablagerungshöhe des recycelten Materials (23) umfasst, indem eines oder mehrere gesteuert werden, aus:
- einer Geschwindigkeit des abgerollten Abschnitts der Eingrenzungslage (21),
- einer Ablagerungsrate des recycelten Materials (23) auf der Eingrenzungslage (21),
- einer Position eines Dickenreglers, welcher operativ auf das auf der Eingrenzungslage (21) abgelegte recycelte Material (23) einwirkt, um eine maximale Dicke davon zu bestimmen.

10. Verfahren nach einem der vorhergehenden Ansprüche, wobei die Eingrenzungslage (21) dazu eingerichtet ist, zu ermöglichen, dass das flüssige Harz hindurchtritt, während verhindert wird, dass das recycelte Material (23) hindurchtritt, optional wobei die Eingrenzungslage (21) ein poröses Material ist oder mit Durchgangsöffnungen versehen ist, wie beispielsweise ein gewebtes Gewebe, ein nichtgewebtes Gewebe, ein vernetzter Kunststofffilm, ein vernetzter Metallfilm, ein Drahtnetz, ein Kunststoffnetz; und wobei die Hilfs-Eingrenzungslage (22), sofern vorhanden, dazu eingerichtet ist, zu ermöglichen, dass das flüssige Harz hindurchtritt, während verhindert wird, dass das recycelte Material (23) hindurchtritt, optional wobei die Hilfs-Eingrenzungslage (22) ein poröses Material ist oder mit Durchgangsöffnungen versehen ist, wie beispielsweise ein gewebtes Gewebe, ein nichtgewebtes Gewebe, ein vernetzter Kunststofffilm, ein vernetzter Metallfilm, ein Drahtnetz, ein Kunststoffnetz.

11. Pultrudiertes Profil, welches aus Verbundmaterial hergestellt ist, welches optional durch das Verfahren nach einem der vorhergehenden Ansprüche erhältlich ist, umfassend einen länglichen Körper (10) mit einem Querschnitt, welcher aufweist:
- eine erste Zone (36), in welcher neue Verstärkungsfasern, welche in eine neue Polymermatrix eingebettet sind, angeordnet sind, und
- eine zweite Zone (37), welche einen Laminarkörper (15) umfasst; wobei der Laminarkörper (15) wenigstens teilweise recyceltes Material umfasst, wobei der Laminarkörper (15) aufweist:
∘ eine Eingrenzungslage (21) und
∘ recyceltes Material, welches auf einer Seite der Eingrenzungslage (21) angeordnet ist, wobei das recycelte Material optional durch Zerkleinern von Verbundmaterial erhalten wird und recycelte Fasern und recycelte Polymerpartikel umfasst;
und wobei der Laminarkörper (15) zudem eine neue Polymermatrix einschließt.

12. Pultrudiertes Profil nach dem vorhergehenden Anspruch, wobei die erste Zone (36) an die zweite Zone (37) angrenzt und mit dieser in Kontakt steht und wobei die neue Polymermatrix der zweiten Zone (37), welche innerhalb des Laminarkörpers (15) vorhanden ist, mit der neuen Polymermatrix der ersten Zone (36) verbunden ist;
und/oder
wobei die zweite Zone (37), welche den Laminarkörper (15) aufnimmt, vollständig von der neuen verstärkten Polymermatrix der ersten Zone (36) eingekapselt ist; wobei:
- die erste Zone (36) eine Umfangszone des Profilquerschnitts ist oder eine solche umfasst, und
- die zweite Zone (37) eine innere, optional mittige Zone des Profilquerschnitts ist, welche vollständig von der ersten Zone (36) umgeben ist;
wobei die zweite Zone (37) den Laminarkörper (15) umfasst, in welchem eine neue Polymermatrix vorhanden ist, welche durch da gleiche polymerisierbare Harz gebildet ist, welches die Polymermatrix der ersten Zone (36) bildet.

13. Pultrudiertes Profil nach einem der Ansprüche 11 bis 12, wobei die neuen Verstärkungsfasern Fasern umfassen, welche sich durch das gesamte pultrudierte Profil erstrecken; und
wobei die neuen Verstärkungsfasern in einer der folgenden Formen vorliegen:
- unidirektionale Faserbündel, welche entlang einer Longitudinalachse einer vorherrschenden Erstreckung des pultrudierten Profils ausgerichtet sind,
- eine oder mehrere Fasermatten, in welchen ein Teil der Fasern entlang der vorherrschenden Longitudinalachse der Erstreckung des pultrudierten Profils ausgerichtet ist und ein Teil der Fasern quer zu der vorherrschenden Longitudinalachse des pultrudierten Profils ausgerichtet ist,
- ein oder mehrere nichtgewebte Fasergewebe, in welchen ein Teil der Fasern entlang der vorherrschenden Longitudinalachse einer Erstreckung des pultrudierten Profils ausgerichtet ist und ein Teil der Fasern quer zu der vorherrschenden Longitudinalachse des pultrudierten Profils ausgerichtet ist; oder
- ein oder mehrere Fasergewebe, in welchen ein Teil der Fasern entlang der vorherrschenden Longitudinalachse einer Erstreckung des pultrudierten Profils ausgerichtet ist und ein Teil der Fasern quer zu der vorherrschenden Longitudinalachse des pultrudierten Profils ausgerichtet ist;
optional wobei die neuen Verstärkungsfasern Glasfasern, Kohlenstofffasern, Borfasern, Basaltfasern, Aramidfasern, Naturfasern oder Kombinationen davon sind.

14. Pultrudiertes Profil nach einem der Ansprüche 11 bis 13, wobei:
- der Laminarkörper (15) eine Hilfs-Eingrenzungslage (22) umfasst, welche mit der Eingrenzungslage (21) gekoppelt ist, sodass recyceltes Material zwischen der Eingrenzungslage (21) und der Hilfs-Eingrenzungslage (22) eingefügt ist;
- der Laminarkörper (15) eine oder mehrere Verbindungslinien zwischen der Eingrenzungslage (21) und der Hilfs-Eingrenzungslage (22) umfasst, welche optional durch Klebelinien, Wärmeabdichtungslinien oder Nahtlinien gebildet werden, welche wenigstens in Longitudinalrichtung entlang der Eingrenzungslage (21) und der Hilfs-Eingrenzungslage (22) angeordnet sind;
- das recycelte Material eine konstante Dicke aufweist und gleichmäßig auf der Rückhaltelage verteilt ist;
und/oder wobei:
- die Eingrenzungslage (21) dazu eingerichtet ist, zu ermöglichen, dass das flüssige polymerisierbare Harz, welches dazu bestimmt ist, die neue Polymermatrix zu bilden, welche in dem Laminarkörper (15) vorhanden ist, hindurchtritt, während verhindert wird, dass das recycelte Material hindurchtritt;
- die Eingrenzungslage (21) aus einem porösen Material hergestellt ist oder mit Durchgangsöffnungen versehen ist, wie beispielsweise optional ein gewebtes Gewebe, ein nichtgewebtes Gewebe, ein vernetzter Kunststofffilm, ein vernetzter Metallfilm, ein Drahtnetz, ein Kunststoffnetz;
- die Hilfs-Eingrenzungslage (22), sofern vorhanden, dazu eingerichtet ist, zu ermöglichen, dass das flüssige polymerisierbare Harz, welches dazu bestimmt ist, die neue Polymermatrix zu bilden, welche in dem Laminarkörper (15) vorhanden ist, hindurchtritt, während verhindert wird, dass das recycelte Material hindurchtritt; die Hilfs-Eingrenzungslage (22) aus einem porösen Material hergestellt ist oder mit Durchgangsöffnungen versehen ist, wie beispielsweise optional ein gewebtes Gewebe, ein nichtgewebtes Gewebe, ein vernetzter Kunststofffilm, ein vernetzter Metallfilm, ein Drahtnetz oder ein Kunststoffnetz.

15. Pultrudiertes Profil nach einem der Ansprüche 11 bis 14, wobei die erste Zone (36) eine Fläche aufweist, welche kleiner ist als die der zweiten Zone (37); wobei die erste Zone (36) eine Fläche aufweist, welche zwischen 30 und 70 Prozent in Bezug auf die gesamte Querschnittsfläche des länglichen Körpers (10) misst, während die zweite Zone (37) eine Fläche aufweist, welche zwischen 20 und 80 Prozent in Bezug auf die gesamte Querschnittsfläche des länglichen Körpers (10) misst;
optional wobei die Querschnittsfläche des länglichen Körpers (10) zwei oder mehr der ersten Zonen (36) und zwei oder mehr der zweiten Zonen (37) aufweist, wobei jede der zweiten Zonen von einer jeweiligen ersten Zone umgeben ist, wobei die Summe der Fläche aller ersten Zonen (36) kleiner bemessen ist als die Summe der Flächen aller zweiten Zonen (37), und wobei die ersten Zonen eine Gesamtfläche von zwischen 30 und 70 Prozent relativ zu der gesamten Querschnittsfläche des länglichen Körpers (10) aufweisen, während die zweiten Zonen eine Gesamtfläche von zwischen 20 und 80 Prozent relativ zu der gesamten Querschnittsfläche des länglichen Körpers (10) aufweisen.

## Revendications

1. Procédé de pultrusion pour une fabrication d'un corps allongé, éventuellement d'un profilé, à partir d'un matériau composite, ledit procédé comprenant les étapes suivantes consistant à :
- alimenter de nouvelles fibres de renfort (3) au niveau d'un poste d'imprégnation (5) ;
- imprégner avec une résine liquide durcissable (6) les nouvelles fibres de renfort (3) au niveau du poste d'imprégnation (5) formant de nouvelles fibres de renfort imprégnées ;
- déplacer un corps stratifié (15) constitué d'un matériau au moins partiellement recyclé au niveau d'une filière de pultrusion (9), ledit corps stratifié (15) ayant :
∘ une couche de confinement (21), et
∘ un matériau recyclé (23) éventuellement obtenu par concassage de matériau composite, ledit matériau recyclé (23) incluant des fibres recyclées et des particules polymères recyclées, ledit matériau recyclé (23) étant agencé sur un côté de la couche de confinement (21) ;
- déplacer lesdites nouvelles fibres de renfort imprégnées vers la filière de pultrusion (9) de sorte qu'à l'intérieur de la filière de pultrusion (9) les nouvelles fibres imprégnées reposent adjacentes au corps stratifié (15) ;
- solidifier au moins partiellement ladite résine liquide durcissable (6), formant un corps allongé (10) à l'état solide à la sortie de la filière de pultrusion (9).

2. Procédé selon la revendication 1, dans lequel la filière de pultrusion (9) comprend au plan interne une cavité de mise en forme (9a) configurée pour mettre en forme le corps allongé durant le procédé de pultrusion, et dans lequel les étapes de déplacement des nouvelles fibres de renfort imprégnées et du corps stratifié (15) vers la filière de pultrusion (9) sont configurées pour agencer, au plan interne vis-à-vis de la cavité de mise en forme (9a), les nouvelles fibres de renfort imprégnées dans le périmètre par rapport au corps stratifié (15).

3. Procédé selon la revendication 2, dans lequel les nouvelles fibres de renfort imprégnées sont agencées, à l'intérieur de la filière de pultrusion (9), afin d'envelopper complètement le corps stratifié (15) ;
dans lequel le corps allongé (10), lorsqu'il sort de la filière de pultrusion (9), présente une section transversale dans laquelle le corps stratifié (15) est complètement encapsulé par une matrice polymère renforcée formée par lesdites fibres de renfort nouvellement imprégnées ;
éventuellement dans lequel le procédé implique un déplacement de deux ou plusieurs corps stratifiés (15) de matériau au moins partiellement recyclé au niveau de la filière de pultrusion (9) et dans lequel les nouvelles fibres de renfort imprégnées sont agencées, à l'intérieur de la filière de pultrusion (9), afin d'envelopper complètement chaque corps stratifié (15) ; et dans lequel le corps allongé (10), sortant de la filière de pultrusion (9), présente une surface transversale dans laquelle chaque corps stratifié (15) est complètement encapsulé par une matrice polymère renforcée formée par lesdites nouvelles fibres de renfort imprégnées.

4. Procédé selon l'une quelconque des revendications précédentes, dans lequel il existe une étape d'humidification du/de chaque corps stratifié (15) avec de la résine liquide durcissable, éventuellement dans lequel l'étape d'humidification inclut l'imprégnation du/de chaque corps stratifié (15) avec une résine liquide durcissable (6) au niveau du poste d'imprégnation (5) ; et
dans lequel la résine liquide durcissable utilisée dans ladite étape d'humidification présente la même composition que la résine liquide durcissable utilisée pour l'imprégnation de nouvelles fibres de renfort (3).

5. Procédé selon l'une quelconque des revendications précédentes 2 à 4, dans lequel ladite cavité de mise en forme (9a) fait preuve en coupe transversale d'un profil symétrique et dans lequel le/chaque corps stratifié (15) croise la cavité de mise en forme (9a) se positionnant lui-même centralement par rapport audit profil de cavité, éventuellement dans lequel le/chaque corps stratifié (15) croise la cavité de mise en forme (9a) en se positionnant lui-même symétriquement par rapport audit profil de la cavité de mise en forme ;
éventuellement dans lequel le procédé implique l'introduction de quantités additionnelles de résine liquide durcissable dans ladite filière de pultrusion (9).

6. Procédé selon l'une quelconque des revendications précédentes, dans lequel le corps allongé (10) extrait de la filière de pultrusion (9) présente une conformation de profilé ayant une section transversale uniforme, ladite section transversale ayant :
- une première zone (36), dans laquelle de nouvelles fibres de renfort enchâssées dans une matrice polymère formée par ladite résine polymérisable sont agencées,
- une seconde zone (37) complètement entourée, sans joint, par la première zone (36), la seconde zone (37) comprenant le corps stratifié dans lequel une matrice polymère formée par ladite résine polymérisable est présente ;
dans lequel, suite à ladite étape de solidification de la résine liquide durcissable, la matrice polymère de la seconde zone (37) présente à l'intérieur du corps stratifié (15) est interconnectée avec la matrice polymère de la première zone (36) ;
dans lequel :
- la première zone (36) présente une surface comprise entre 20 et 70 pour cent de la surface transversale totale du corps allongé (10),
- la seconde surface, en particulier dépourvue de nouvelles fibres de renfort, présente une surface de mesure comprise entre 30 et 80 pour cent de la surface transversale totale du corps allongé (10) ;
éventuellement dans lequel :
- la première zone (36) est une zone dans le périmètre qui présente un contour annulaire fermé autour de la seconde zone (37) qui est une zone centrale du corps allongé (10) en cours de formation où le corps stratifié (15) est agencé ; et
- la première zone (36) présente une surface inférieure à celle de la seconde zone (37).

7. Procédé selon l'une quelconque des revendications précédentes, dans lequel de nouvelles fibres de renfort sont continuellement alimentées au niveau de la filière de pultrusion (9) afin de s'étendre, éventuellement parallèles l'une à l'autre, le long du corps allongé entier extrait de la filière de pultrusion (9) ;
dans lequel les nouvelles fibres de renfort se présentent sous la forme de l'un entre :
- des faisceaux de fibres unidirectionnelles,
- un ou plusieurs mats de fibres,
- une ou plusieurs bandes de textile de fibres non-tissé, ou
- une ou plusieurs bandes de textile de fibres,
éventuellement les nouvelles fibres de renfort étant des fibres de verre, des fibres de carbone, des fibres de bore, des fibres de basalte, des fibres d'aramide, des fibres d'origine naturelle ou des combinaisons de celles-ci ;
et dans lequel le/chaque corps stratifié (15) est continuellement alimenté au niveau de la filière de pultrusion (9) en même temps que les nouvelles fibres de renfort,
éventuellement dans lequel le corps stratifié (15) s'étend longitudinalement le long du corps allongé (10) entier sortant de la filière de pultrusion (9).

8. Procédé selon l'une quelconque des revendications précédentes, comprenant la formation du/de chaque corps stratifié (15) continuellement durant le procédé de pultrusion ;
dans lequel la mise en forme du/de chaque corps stratifié (15) inclut les étapes consistant à :
- concasser, éventuellement par broyage mécanique, un ou plusieurs produits de déchet en matériau composite pour obtenir ledit matériau recyclé (23) comprenant des fibres recyclées et des particules polymères recyclées ;
- déposer le matériau recyclé (23) sur ledit côté de la couche de confinement (21), et éventuellement lier le matériau recyclé (23) audit côté de la couche de confinement (21) par l'une ou plusieurs de l'application de colle au matériau recyclé (23), l'application de colle à la couche de confinement (21), la fusion au moins d'une partie du matériau recyclé (23), la fusion au moins d'une partie de la couche de confinement (21).

9. Procédé selon la revendication précédente, dans lequel la mise en forme du, ou de chaque, corps stratifié (15) inclut les étapes consistant à :
- associer la couche de confinement (21) à une couche de confinement auxiliaire (22) de sorte que le matériau recyclé (23) est pris en sandwich entre la couche de confinement (21) et la couche de confinement auxiliaire (22) ;
dans lequel l'association de la couche de confinement (21) à la couche de confinement auxiliaire (22) inclut les étapes consistant à :
- positionner la couche de confinement (21) et la couche de confinement auxiliaire (22) en une relation mutuellement de chevauchement, et
- accoupler la couche de confinement (21) et la couche de confinement auxiliaire (22) ensemble ;
dans lequel durant ladite étape consistant à associer la couche de confinement auxiliaire (22) à la couche de confinement (21), le procédé inclut les étapes suivantes consistant à :
- (a) déplacer la couche de confinement (21) ;
- (b) déposer le matériau recyclé (23) sur ledit côté de la couche de confinement (21) tout en déplaçant cette dernière ;
- (c) déplacer la couche de confinement auxiliaire (22) au-dessus de la couche de confinement (21) et le matériau recyclé (23) déposé sur la couche de confinement (21) elle-même ;
et dans lequel :
- l'étape (a) consistant à déplacer la couche de confinement (21) inclut le déroulage de la couche de confinement (21) depuis un rouleau d'alimentation respectif, l'agencement d'une section déroulée de la couche de confinement (21) le long d'un plan d'alimentation,
- l'étape (b) de dépôt du matériau recyclé (23) implique une distribution du matériau recyclé (23) sur ladite section déroulée de la couche de confinement (21),
- l'étape (c) de déplacement de la couche de confinement auxiliaire (22) implique le déroulage de la couche de confinement auxiliaire (22) depuis un rouleau d'alimentation respectif en agençant une section déroulée de la couche de confinement auxiliaire (22) sur le dessus du matériau recyclé (23) distribué sur la section déroulée de la couche de confinement (21) ;
éventuellement dans lequel l'accouplement de la couche de confinement (21) et de la couche de confinement auxiliaire (22) inclut conjointement l'étape consistant à :
- (d) lier la section déroulée de la couche de confinement auxiliaire (22) à la section déroulée de la couche de confinement (21) le long d'une ou plusieurs lignes de raccordement, éventuellement obtenues par des lignes de collage, des lignes de thermoscellage, ou des lignes de couture, agencées au moins longitudinalement le long de la couche de confinement (21) et de la couche de confinement auxiliaire (22) ;
et même plus facultativement dans lequel des étapes (b) et (d) ont lieu durant lesdites étapes (a) et (c) pour former progressivement le/chaque corps stratifié (15) qui est ensuite envoyé à la filière de pultrusion (9) ; et dans lequel l'étape (b) de dépôt additionnellement inclut une étape d'ajustement d'une hauteur de dépôt du matériau recyclé (23) en régulant l'un ou plusieurs parmi :
- une vitesse de ladite section déroulée de la couche de confinement (21),
- un taux de dépôt du matériau recyclé (23) sur la couche de confinement (21),
- une position d'un ajusteur d'épaisseur fonctionnellement actif sur le matériau recyclé (23) déposé sur la couche de confinement (21) pour déterminer une épaisseur maximale de celle-ci.

10. Procédé selon l'une quelconque des revendications précédentes, dans lequel la couche de confinement (21) est configurée pour permettre à la résine liquide de passer à travers, tout en empêchant le matériau recyclé (23) de passer à travers,
éventuellement dans lequel la couche de confinement (21) est un matériau poreux ou est pourvu d'ouvertures traversantes telles qu'un textile tissé, un textile non-tissé, un film en matière plastique réticulée, un film en métal réticulé, un treillis métallique, un treillis en matière plastique ; et
dans lequel la couche de confinement auxiliaire (22), si elle est présente, est configurée pour permettre à la résine liquide de passer à travers tout en empêchant le matériau recyclé (23) de passer à travers, éventuellement dans lequel la couche de confinement auxiliaire (22) est un matériau poreux, ou est pourvu d'ouvertures traversantes telles qu'un textile tissé, un textile non-tissé, un film en matière plastique réticulée, un film en métal réticulé, un treillis métallique, un treillis en matière olastique.

11. Profilé pultrudé fabriqué à partir d'un matériau composite, éventuellement pouvant être obtenu selon le procédé selon l'une quelconque des revendications précédentes, comprenant un corps allongé (10) ayant une section transversale ayant :
- une première zone (36), dans laquelle de nouvelles fibres de renfort enchâssées dans une nouvelle matrice polymère sont agencées, et
- une seconde zone (37) comprenant un corps stratifié (15) ; dans lequel le corps stratifié (15) inclut un matériau au moins partiellement recyclé, ledit corps stratifié (15) ayant :
∘ une couche de confinement (21) et
∘ un matériau recyclé placé sur un côté de la couche de confinement (21), dans lequel le matériau recyclé est éventuellement obtenu par concassage de matériau composite et inclut des fibres recyclées et des particules polymères recyclées ;
et dans lequel le corps stratifié (15) incorpore également une nouvelle matrice polymère.

12. Profilé pultrudé selon la revendication précédente, dans lequel la première zone (36) est adjacente à, et en contact avec, la seconde zone (37) et dans lequel la nouvelle matrice polymère de la seconde zone (37), présente au plan interne dans le corps stratifié (15), est raccordée à la nouvelle matrice polymère de la première zone (36) ; et/ou
dans lequel la seconde zone (37) logeant le corps stratifié (15), est complètement encapsulée par la nouvelle matrice polymère renforcée de la première zone (36) ; dans lequel :
- la première zone (36) est, ou inclut, une zone dans le périmètre de la section transversale du profilé, et
- la seconde zone (37) est une zone interne, éventuellement centrale, de la section transversale du profilé complètement et entourée de la première zone (36) ;
dans lequel ladite seconde zone (37) inclut le corps stratifié (15) dans lequel la nouvelle matrice polymère formée par la même résine polymérisable formant une matrice polymère de la première zone (36) est présente.

13. Profilé pultrudé selon l'une quelconque des revendications 11 à 12, dans lequel les nouvelles fibres de renfort incluent des fibres qui s'étendent à travers le profilé pultrudé entier ; et
dans lequel les nouvelles fibres de renfort se présentent sous la forme de l'un entre :
- des faisceaux unidirectionnels de fibres orientés le long d'un axe longitudinal de développement prédominant du profilé pultrudé,
- un ou plusieurs mats de fibres dans lesquels une partie des fibres sont orientées le long de l'axe longitudinal de développement prédominant du profilé pultrudé et une partie des fibres sont orientées transversalement audit axe longitudinal prévalant du profilé pultrudé,
- un ou plusieurs textiles non-tissés de fibres dans lesquels une partie des fibres sont orientées le long de l'axe de développement longitudinal prévalant du profilé pultrudé et une partie des fibres sont orientées transversalement audit axe longitudinal prévalant du profilé pultrudé ; ou
- un ou plusieurs textiles de fibre dans lesquels une partie des fibres sont orientées le long de l'axe de développement longitudinal prévalant du profilé pultrudé et une partie des fibres sont orientées transversalement audit axe longitudinal prévalant du profilé pultrudé ;
éventuellement dans lequel les nouvelles fibres de renfort sont des fibres de verre, des fibres de carbone, des fibres de bore, des fibres de basalte, des fibres d'aramide, des fibres d'origine naturelle ou des combinaisons de celles-ci.

14. Profilé pultrudé selon l'une quelconque des revendications 11 à 13, dans lequel :
- le corps stratifié (15) inclut une couche de confinement auxiliaire (22) accouplée à la couche de confinement (21) de sorte qu'un matériau recyclé est interposé entre la couche de confinement (21) et la couche de confinement auxiliaire (22) ;
- le corps stratifié (15) inclut une ou plusieurs lignes de raccordement entre la couche de confinement (21) et la couche de confinement auxiliaire (22), éventuellement réalisées par des lignes de collage, des lignes de thermoscellage ou des lignes de couture, agencé au moins longitudinalement le long de la couche de confinement (21) et de la couche de confinement auxiliaire (22) ;
- le matériau recyclé présente une épaisseur constante et est réparti de manière uniforme sur la couche de retenue ; et/ou dans lequel :
- la couche de confinement (21) est configurée pour permettre à la résine liquide polymérisable prévue pour former la nouvelle matrice polymère présente dans le corps stratifié (15) de passer à travers, tout en empêchant le matériau recyclé de passer à travers ;
- la couche de confinement (21) est constituée d'un matériau poreux ou pourvue d'ouvertures traversantes telles qu'éventuellement un textile tissé, un textile non-tissé, un film en matière plastique réticulée, un film en métal réticulé, un treillis métallique, un treillis en matière plastique ;
- la couche de confinement auxiliaire (22), si elle est présente, est configurée pour permettre à la résine liquide polymérisable prévue pour former la nouvelle matrice polymère présente dans le corps stratifié (15) de passer à travers, tout en empêchant le matériau recyclé de passer à travers ; la couche de confinement auxiliaire (22) est constituée d'un matériau poreux ou pourvue d'ouvertures traversantes telles qu'éventuellement un textile tissé, un textile non-tissé, un film en matière plastique réticulée, un film en métal réticulé, un treillis métallique, ou un treillis en matière plastique.

15. Profilé pultrudé selon l'une quelconque des revendications 11 à 14, dans lequel la première zone (36) présente une surface inférieure à celle de la seconde zone (37) ; dans lequel la première zone (36) présente une surface mesurant entre 30 et 70 pour cent par rapport à la surface transversale totale du corps allongé (10), tandis que la seconde zone (37) présente une surface mesurant entre 20 et 80 pour cent par rapport à la surface transversale totale du corps allongé (10) ;
éventuellement dans lequel la surface transversale du corps allongé (10) présente deux ou plusieurs desdites premières zones (36) et deux ou plusieurs desdites secondes zones (37), chacune des secondes zones étant entourée d'une première zone respective, dans lequel la somme de la surface de toutes les premières zones (36) mesure moins que la somme des surfaces de toutes les secondes zones (37), et dans lequel les premières zones présentent une surface totale comprise entre 30 et 70 pour cent par rapport à la surface transversale totale du corps allongé (10), tandis que les secondes zones présentent une surface totale comprise entre 20 et 80 pour cent par rapport à la surface transversale totale du corps allongé (10).
